(19) Europäisches Patentamt
European Patent Office
Office européen des brevets

(11) EP 3 689 444 A1

(12) **EUROPEAN PATENT APPLICATION**
published in accordance with Art. 153(4) EPC

(43) Date of publication:
**05.08.2020 Bulletin 2020/32**

(21) Application number: **18858963.4**

(22) Date of filing: **25.09.2018**

(51) Int Cl.:
***B01D 69/08*** *(2006.01)* ***B01D 69/10*** *(2006.01)*
***B01D 69/12*** *(2006.01)* ***B01D 71/34*** *(2006.01)*
***B01D 71/40*** *(2006.01)*

(86) International application number:
**PCT/JP2018/035363**

(87) International publication number:
**WO 2019/059397 (28.03.2019 Gazette 2019/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.09.2017 JP 2017183630**
**12.03.2018 JP 2018044646**
**09.08.2018 JP 2018149977**

(71) Applicant: **Mitsubishi Chemical Corporation**
**Tokyo 100-8251 (JP)**

(72) Inventors:
- **HIKITA Shingo**
  **Tokyo 100-8251 (JP)**
- **IDEGUCHI Makoto**
  **Tokyo 100-8251 (JP)**
- **FUJII Yuuki**
  **Tokyo 100-8251 (JP)**
- **FUKUTA Hiroki**
  **Tokyo 100-8251 (JP)**
- **SUZUKI Takaaki**
  **Tokyo 100-8251 (JP)**

(74) Representative: **Hoffmann Eitle**
**Patent- und Rechtsanwälte PartmbB**
**Arabellastraße 30**
**81925 München (DE)**

# (54) HOLLOW FIBER MEMBRANE

(57) Provided is a hollow fiber membrane having favorable peeling resistance and water permeability and high performance with respect to blocking fine particles. The hollow fiber membrane of the present invention is a hollow fiber membrane including: a support; and a porous membrane layer disposed on an outer circumferential surface of the support, in which a BU value (inside) is less than or equal to 36 and an R value is 1.1 to 2.1.



Printed by Jouve, 75001 PARIS (FR)

## Description

[Technical Field]

The present invention relates to a hollow fiber membrane.

Priority is claimed on Japanese Patent Application No. 2017-183630, filed September 25, 2017, Japanese Patent Application No. 2018-044646, filed March 12, 2018, and Japanese Patent Application No. 2018-149977, filed August 9, 2018, the contents of which are incorporated herein by reference.

[Background Art]

In recent years, water treatment using a porous membrane has been attracting attention due to growing interest in environmental pollution, strengthening in various regulations, or the like. Such a porous membrane is used in various fields such as the water treatment field, for example, drinking water production, water purification treatment, or wastewater treatment. In addition, for example, mechanical strengths such as peeling resistance with respect to a support for supporting a porous membrane as well as high rejection performance or inherent performance of a membrane such as hydrophilicity and water permeability are also required for such a porous membrane.

Various porous membranes made of, for example, fluorine resin polymer compositions such as polyvinylidene fluoride (hereinafter, also referred to as "PVDF") which provide various excellent membrane characteristics have been proposed in the related art. In addition, a hollow fiber membrane obtained by providing a porous membrane on an outer circumferential surface of a support made of cylindrical knitted braid obtained by circularly knitting a fiber is suitably used for the above-described water treatment.

On the other hand, in some cases, inorganic particles, activated carbon introduced for a measure against offensive odors, or the like are contained in water to be treated with a hollow fiber membrane, and these impurities sometimes come into contact with the hollow fiber membrane. In particular, in a case of subjecting a hollow fiber membrane to an air scrubbing treatment or the like, inorganic particles, activated carbon, or the like in water to be treated violently collide with the hollow fiber membrane. Therefore, scraping of the surface of a porous membrane causes the porous membrane to peel off from the support, and membrane characteristics deteriorate due to decrease in rejection performance or water permeability. Accordingly, there is a concern that the water treatment efficiency may deteriorate.

A hollow fiber membrane which has a porous membrane layer on a knitted braid support and in which the porous membrane layer infiltrates 50% or more of the thickness of the support through stitches of the knitted braid support has been proposed in Patent Literature 1.

[Citation List]

[Patent Literature]

[Patent Literature 1] PCT International Publication No. WO2009/142279

[Summary of Invention]

[Technical Problem]

However, although the hollow fiber membrane disclosed in Patent Literature 1 has excellent peeling resistance, since peeling between the porous membrane layer and the support consisting of knitted braid may occur under severe conditions compared to a hollow fiber membrane in which a porous membrane layer does not infiltrate 50% or more of the thickness of the support through stitches of a knitted braid support, improvement in peeling resistance is therefore required.

The present invention has been made in consideration of the above-described problems, and an object of the present invention is to provide a hollow fiber membrane having favorable peeling resistance and water permeability and high performance with respect to blocking fine particles.

[Solution to Problem]

In order to solve the above-described problem, the present invention includes the following aspects.

[1] A hollow fiber membrane including: a support; and a porous membrane layer disposed on an outer circumferential surface of the support, in which a BU value (inside) is less than or equal to 36 and an R value is 1.1 to 2.1, in which

the BU value (inside) is a value obtained from a standard deviation of a luminance of all pixels constituting a specific line segment at a position (closer to the support) at 65% of a thickness of the porous membrane layer in which a cross-sectional image of the hollow fiber membrane subjected to image processing is used, the R value is a value obtained by dividing the BU value (inside) by a BU value (outside), and the BU value (outside) is a value obtained from a standard deviation of a luminance of all pixels constituting a specific line segment at a position (closer to an outer surface) at 5% of a thickness of the porous membrane layer in which a cross-sectional image of the hollow fiber membrane subjected to image processing is used.

[2] The hollow fiber membrane according to [1], in which the BU value (outside) is less than or equal to 19.

[3] The hollow fiber membrane according to [1] or [2], in which the BU value (inside) is greater than or equal to 16.

[4] The hollow fiber membrane according to any one of [1] to [3], in which the BU value (outside) is greater than or equal to 6.

[5] The hollow fiber membrane according to any one of [1] to [4], in which the R value is less than or equal to 1.9.

[6] The hollow fiber membrane according to any one of [1] to [5], in which the R value is greater than or equal to 1.5.

[7] The hollow fiber membrane according to any one of [1] to [6], in which the BU value (outside) is greater than or equal to 23.

[8] The hollow fiber membrane according to any one of [1] to [7], in which the BU value (outside) is greater than or equal to 10.

[9] The hollow fiber membrane according to any one of [1] to [8], in which the BU value (outside) is greater than or equal to 13.

[10] The hollow fiber membrane according to any one of [1] to [9], in which a result of a peeling resistance performance test is 1 piece or less.

[11] The hollow fiber membrane according to any one of [1] t0 [10], in which a water permeability is greater than or equal to 5 $m^3/m^2$/MPa/h.

[12] The hollow fiber membrane according to any one of [1] to [11], in which a rejection (%) of 48 nm particles is higher than or equal to 90%.

[13] The hollow fiber membrane according to any one of [1] to [12], in which a rejection (%) of 40 nm particles is higher than or equal to 80%.

[14] The hollow fiber membrane according to any one of [1] to [12], in which a rejection (%) of 40 nm particles is higher than or equal to 90%.

[15] The hollow fiber membrane according to any one of [1] to [14], in which the support is a knitted.

In addition, the present invention includes the following aspects.

<1> A method for producing a hollow fiber membrane, the method including: coating an outer circumferential surface of a support with a membrane-forming stock solution, subjecting the support coated with the membrane-forming stock solution to motion in air, and then coagulating the membrane-forming stock solution in a coagulation solution at 55°C to 75°C to obtain a porous membrane precursor layer in order to obtain a hollow fiber membrane precursor having the porous membrane precursor layer; and removing polyvinyl pyrrolidone contained in the porous membrane precursor layer, in which the membrane-forming stock solution contains polyvinylidene fluoride having a mass average molecular weight (Mw) in a range of $5.0 \times 10^5$ to $8.0 \times 10^5$, polyvinyl pyrrolidone having a K value in a range of 15 to 45, and a solvent.

<2> The method for producing a hollow fiber membrane according to <1>, in which the membrane-forming stock solution contains 17 to 23 mass% of polyvinylidene fluoride and 17 to 23 mass% of polyvinyl pyrrolidone.

<3> The method for producing a hollow fiber membrane according to any one of <1> or <2>, in which a membrane-forming stock solution further containing a copolymer having a 2-methoxyethyl acrylate unit, a hydroxyl group-containing (meth)acrylate unit, and a macromonomer unit having a partial structure represented by the following Formula (1) is used as the membrane-forming stock solution.

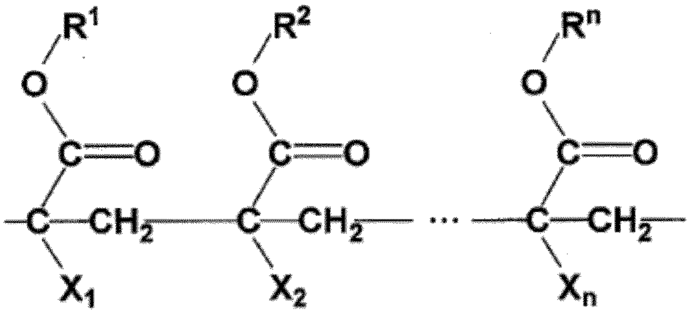

(1)

[In the above-described Formula (1), $R^1$ to $R^n$ each independently represent a hydrogen atom, an alkyl group, a cycloalkyl group, an aryl group, or a heterocyclic group, $X_1$ to $X_n$ each independently represent a hydrogen atom or a methyl group, and n represents an integer of 3 to 10,000.]

<4> A method for producing a hollow fiber membrane including: coating an outer circumferential surface of a support with a membrane-forming stock solution for an inner layer, coating an outer circumferential surface of the membrane-forming stock solution for an inner layer with which the support is coated with a membrane-forming stock solution for an outer layer, subjecting the support coated with the membrane-forming stock solution for an inner layer and the membrane-forming stock solution for an outer layer to motion in air, and then coagulating the membrane-forming stock solution for an inner layer and the membrane-forming stock solution for an outer layer in a coagulation solution at 55°C to 75°C to obtain a porous membrane precursor layer in order to obtain a hollow fiber membrane precursor having the porous membrane precursor layer; and removing polyvinyl pyrrolidone contained in the porous membrane precursor layer, in which the membrane-forming stock solution for an inner layer and the membrane-forming stock solution for an outer layer are the same as or different from each other and both contain polyvinylidene fluoride having a mass average molecular weight (Mw) in a range of $5.0 \times 10^5$ to $8.0 \times 10^5$, polyvinyl pyrrolidone having a K value in a range of 15 to 45, and a solvent.

<5> The method for producing a hollow fiber membrane according to <4>, in which the membrane-forming stock solution for an inner layer and the membrane-forming stock solution for an outer layer are membrane-forming stock solutions having the same composition.

<6> The method for producing a hollow fiber membrane according to <4>, in which the membrane-forming stock solution for an inner layer and the membrane-forming stock solution for an outer layer are membrane-forming stock solutions having different compositions.

<7> The method for producing a hollow fiber membrane according to any one of <4> to <6>, in which the membrane-forming stock solution for an inner layer contains 17 to 23 mass% of polyvinylidene fluoride and 17 to 23 mass% of polyvinyl pyrrolidone.

<8> The method for producing a hollow fiber membrane according to any one of <4> to <7>, in which the membrane-forming stock solution for an outer layer contains 17 to 23 mass% of polyvinylidene fluoride and 14 to 23 mass% of polyvinyl pyrrolidone.

<9> The method for producing a hollow fiber membrane according to any one of <4> to <8>, in which a membrane-forming stock solution further containing a copolymer having a 2-methoxyethyl acrylate unit, a hydroxyl group-containing (meth)acrylate unit, and a macromonomer unit having a partial structure represented by the above-described Formula (1) is used as one or both of the membrane-forming stock solution for an inner layer and the membrane-forming stock solution for an outer layer.

[Advantageous Effects of Invention]

The hollow fiber membrane according to the present invention has favorable peeling resistance and water permeability and high performance with respect to blocking fine particles. For this reason, even when the hollow fiber membrane is used under severe conditions in various water treatment fields such as drinking water production, water purification treatment, or wastewater treatment, peeling between a porous membrane and a support that supports the porous membrane is unlikely to occur, and therefore, the hollow fiber membrane can be used for a long period of time.

[Brief Description of Drawings]

Fig. 1 is a schematically view of a first embodiment of a production method for obtaining a hollow fiber membrane

according to the present invention and is a schematic diagram showing an example of a hollow fiber membrane-forming device.

Fig. 2 is a schematically view of a second embodiment of a production method for obtaining a hollow fiber membrane according to the present invention and is a schematic diagram showing an example of a hollow fiber membrane-forming device.

Fig. 3 is a schematically view of how to obtain a middle point A, a point B, a point C, and a point D which are necessary for obtaining a BU value (inside) and a BU value (outside), and shows that the points B, C, and D when the middle point A is A1 are respectively B1, C1, and D1.

Fig. 4 is a schematically view of how to obtain a middle point A, a point B, a point C, and a point D which are necessary for obtaining a BU value (inside) and a BU value (outside), and shows that the points B, C, and D when the middle point A is A2 are respectively B2, C2, and D2.

[Description of Embodiments]

Hereinafter, a hollow fiber membrane according to the present invention will be described in detail.

<Hollow Fiber Membrane>

The hollow fiber membrane of the present invention includes a support and a porous membrane layer disposed on an outer circumferential surface of the support. In the hollow fiber membrane of the present invention, the porous membrane layer is disposed to cover the entire outer circumferential surface of the support at a portion where the hollow fiber membrane comes into contact with water to be treated in a water treatment.

[Support]

The support is a hollow support in which filaments are molded into a cylindrical shape. Examples of the method for molding filaments into a cylindrical shape include a method for obtaining a knitted braid form by circularly knitting a filament (fiber) into a cylindrical shape or a method for obtaining a plaited cord form by plaiting a plurality of filaments into a cylindrical shape. Among these, the method for obtaining a knitted braid form circularly knitted into a cylindrical shape is preferable from the viewpoint of good productivity and appropriate stretchability and rigidity. Furthermore, it is more preferable to impart rigidity by subjecting knitted braid circularly knitted into a cylindrical shape to a heat treatment.

The "circular knitting" described in the present specification means that cylindrical horizontal knitted fabric is knitted using a circular knitting machine, and the "knitted braid obtained by circularly knitting a filament into a cylindrical shape" means knitted braid obtained by bending filaments to form continuous loops extending in a spiral shape, and relating these loops to each other on sides in front, the rear, left and right.

That is, in the hollow fiber membrane of the present embodiment, a hollow cylindrical, cord-shaped object can be used as the support. A cylindrical knitted braid support obtained by knitting a fiber into a cylindrical shape and subjecting the knitted fiber to a heat treatment may be used as such a hollow cylindrical, cord-shaped object.

The material of the filament constituting the support is not particularly limited, but examples thereof include synthetic fibers, semisynthetic fibers, regenerated fibers, or natural fibers. In addition, the filament may be a filament obtained by combining multiple kinds of fibers.

Examples of the above-described synthetic fibers include: polyamide fibers such as nylon 6, nylon 66, and aromatic polyamide; polyester fibers such as polyethylene terephthalate (PET), polybutylene terephthalate (PBT), polylactic acid, and polyglycolic acid; acrylic fibers such as polyacrylonitrile; polyolefin fibers such as polyethylene and polypropylene; polyvinyl alcohol fibers; polyvinylidene chloride fibers; polyvinyl chloride fibers; polyurethane fibers; phenolic resin fibers; fluorine fibers such as polyvinylidene fluoride and polytetrafluoroethylene; and polyalkylene paraoxybenzoate fibers.

In addition, examples of the semisynthetic fibers include: cellulose derivative fibers obtained by using cellulose diacetate, cellulose triacetate, chitin, and chitosan as raw materials; and protein fibers called Promix.

In addition, examples of the regenerated fibers include regenerated cellulose fibers (such as rayon, cupra, and polynosic) obtained through a viscose method, a copper-ammonia method, an organic solvent method, and the like.

In addition, examples of the natural fibers include flax and jute.

Among the above, as the material of the filament, at least one selected from the group consisting of polyester fibers, acrylic fibers, polyvinyl alcohol fibers, polyamide fibers, and polyolefin fibers is preferable from the viewpoint of excellent chemical resistance, and polyester fibers such as PET are more preferable from the viewpoint of excellent resistance to hypochlorous acid or a salt thereof (for example, sodium hypochlorite) used for cleaning a hollow fiber membrane.

In addition, although the structure of the filament is not particularly limited, examples thereof include a monofilament, a multifilament, and spun yarn. Among these, a multifilament is preferable. Here, the "multifilament" described in the present specification means a filament obtained by twisting several to several tens of fibers. In a case where the filament is a multifilament, there is an advantage that the outer diameter of a support is easily controlled. In addition, the above-described "filament" means a fiber having a continuous length.

The fineness of the filament can be determined in consideration of the outer diameter, the inner diameter, the thickness, and the like of a support, and is, for example, preferably 50 to 450 dtex and more preferably 100 to 200 dtex.

In addition, the outer diameter of a support is determined by the outer diameter and the membrane thickness of a hollow fiber membrane 10. For this reason, the outer diameter may be determined in consideration of such parameters.

In addition, in a case where the support is a knitted braid obtained by circularly knitting filaments into a cylindrical shape, the density of the filaments in the knitted braid can be determined by the outer diameter of the support and the fineness of the filaments.

[Porous Membrane Layer]

In the porous membrane layer constituting the hollow fiber membrane of the present invention, the thickness is preferably set to be less than or equal to 200 μm.

In the case where the thickness of the porous membrane layer is set to be less than or equal to 200 μm, there are tendencies that the permeation resistance is reduced, an excellent water permeability is obtained, the coagulation time when forming a porous membrane layer using a membrane-forming stock solution as a polymer resin solution can be shortened, macrovoids (defective area) are effectively suppressed, and excellent productivity can be obtained.

The thickness of the porous membrane layer is more preferably less than or equal to 150 μm and still more preferably less than or equal to 120 μm.

In addition, in the porous membrane layer constituting the hollow fiber membrane of the present invention, the thickness is preferably set to be greater than or equal to 50 μm.

In the case where the thickness of the porous membrane layer is greater than or equal to 50 μm, there is a tendency that a mechanical strength that does not cause any practical problem can be obtained. However, in a case where the outer diameter of a membrane is small, the mechanical strength can be sometimes maintained even if the thickness of the membrane is less than 50 μm, and therefore, the thickness of the membrane is not limited thereto.

The thickness of the porous membrane layer is more preferably greater than or equal to 70 μm and still more preferably greater than or equal to 90 μm.

The thickness of the porous membrane layer constituting the hollow fiber membrane of the present invention is preferably 50 μm to 200 μm, more preferably 70 μm to 150 μm, and still more preferably 90 μm to 120 μm.

[BU Value (Inside)]

The hollow fiber membrane of the present invention is a hollow fiber membrane having a BU value (inside) less than or equal to 36.

The BU value (inside) means a BU value in an area close to a support of a porous membrane layer, and is an index indicating the size of a pore diameter or the number of pores in the area close to the support of the porous membrane layer.

The BU value (inside) is obtained from a standard deviation of a luminance of all pixels constituting a specific line segment at a position (closer to the support) at 65% of a thickness of the porous membrane layer in which a cross-sectional image of the hollow fiber membrane subjected to image processing is used. Specifically, the BU value (inside) can be obtained through a method ("Method for Obtaining BU Value (Inside)") described in examples.

As the BU value (inside) becomes smaller, the pore diameter or the number of pores tends to become smaller in an area close to the support of the porous membrane layer and peeling between the porous membrane layer and the support tends to become more hardly to occur.

In a case where the BU value (inside) is less than or equal to 36, the peeling resistance of the hollow fiber membrane improves. From the viewpoint of the peeling resistance, the BU value (inside) is preferably less than or equal to 34, more preferably less than or equal to 32, and still more preferably less than or equal to 30.

In addition, the BU value (inside) is preferably greater than or equal to 16. In a case where the BU value (inside) is greater than or equal to 16, the water permeability of the hollow fiber membrane improves. From the viewpoint of the water permeability, the BU value (inside) is preferably greater than or equal to 19, more preferably greater than or equal to 21, and still more preferably greater than or equal to 23.

The BU value (inside) is preferably 16 to 36, more preferably 19 to 36, still more preferably 19 to 34, still more preferably 21 to 32, and particularly preferably 23 to 30.

In (4) of "Method for Obtaining BU Value (Inside)" in the examples, in a case where an area from the outer surface of the porous membrane layer to a boundary surface between the support and the porous membrane layer does

not fit in a visual field of a magnification of 1000 times image, the BU value (inside) is obtained as follows. Method for Obtaining BU Value (Inside) in Case Where Area from Outer Surface of Porous Membrane Layer to Boundary Surface between Support and Porous Membrane Layer Does Not Fit in Visual Field of Magnification of 1000 Times Image.

(1) to (3): The same operations as those of (1) to (3) of "Method for Obtaining BU Value (Inside)" of the examples are performed.
(4) An image of a cut surface in a direction perpendicular to the fiber direction of the sample 1 obtained in (3) is taken at a magnification of 500 times using a scanning electron microscope so that an area from the outer surface of the porous membrane layer to a boundary surface between a support and the porous membrane layer fits in a visual field. The following (α) to (ε) are performed on the taken image.

(α) A middle point A of the outer circumference (portion appearing on the image) of the porous membrane layer is obtained, and a tangent of the outer circumference from the middle point A is drawn.
(β) The perpendicular is drawn from the middle point A with respect to the tangent drawn in (α).
(γ) A point at which the perpendicular drawn in (β) first reaches the support from the middle point A is regarded as a point B. However, in a case where there is a gap between the porous membrane layer and the support from the middle point A to the point B, the edge of the gap on the porous membrane layer side on the perpendicular is regarded as the point B.
(δ) Assuming that the length of a line segment AB is set as 100%, a point D positioned at 65% along a length from the point A on the line segment AB is obtained.
(ε) A distance LAD (μm) of a line segment AD is measured.

(5) The cut surface of the sample 1 of (4) is observed with a scanning electron microscope at a magnification of 1,000 times. At this time, the position of the cut surface of the sample 1 is adjusted so that the line segment AD fits in the visual field.
(6) Regarding the cut surface of the sample 1 of which the position is adjusted in (5), a scanning electron image (at a magnification of 1,000 times and a number of pixels of $640 \times 480$) in which the line segment AD fits in the visual field is taken.
(7) The image taken in (6) is subjected to the following (a) to (c) with image analysis software Image-Pro PLUS (manufactured by Media Cybernetics Inc.)
Any software in addition to this software may be used as the image analysis software as long as the following processing (a) to (c) can be performed.

(a) A photographic image is converted into an 8-bit grayscale (that is, a 256-gradation luminance scale) image.
(b) The converted image in (a) is subjected to processing of making a cumulative histogram of a luminance over the entire 256-gradation luminance scale into a linear shape.
(c) The processed image in (b) is repeatedly subjected to $5 \times 5$ median average processing three times.

(8) The processed image in (c) of (7) is subjected to the following (d) to (j).

(d) A middle point A' of the outer circumference (portion appearing on the image) of the porous membrane layer is obtained, and a tangent of the outer circumference from the middle point A' is drawn.
(e) The perpendicular is drawn from the middle point A' with respect to the tangent drawn in (d).
(f) A point D' positioned at the LAD (μm) obtained in (ε) of (4) from the point A' on the perpendicular of (e) is obtained.
(g) A straight line perpendicular to the perpendicular of (e) from the point D' is drawn.
(h) A line segment which is on the straight line drawn in (g), has a middle point at the point D', and has a length of 85 μm is obtained. In a case where the line segment cannot fit in the range of the image, the process returns to (6), an image is taken again while changing the visual field to be observed, and the subsequent operation is performed.
(i) A standard deviation of a luminance of all pixels constituting the line segment obtained in (h) is obtained and set as "BUD1".

(9) to (11): The same operations as those of (7) to (9) of "Method for Obtaining BU Value (Inside)" of the examples are performed.

[BU Value (Outside)]

The BU value (outside) means a BU value in a area close to the outer surface of a porous membrane layer and is an index indicating the size of a pore diameter or the number of pores in an area close to the surface of the porous membrane layer.

The BU value (outside) is obtained from a standard deviation of a luminance of all pixels constituting a specific line segment at a position (closer to the outer surface) at 5% of a thickness of the porous membrane layer in which a cross-sectional image of the hollow fiber membrane subjected to image processing is used. Specifically, the BU value (outside) can be obtained through a method ("Method for Obtaining BU Value (outside)") described in examples.

As the BU value (outside) becomes smaller, the pore diameter or the number of pores tends to become smaller in an area close to the outer surface of the porous membrane layer, and the outer surface of the porous membrane layer tends to become more hardly to be scraped. The scraping of the outer surface of the porous membrane layer can cause peeling between the porous membrane layer and the support.

The BU value (outside) is preferably less than or equal to 19. In a case where the BU value (outside) is less than or equal to 19, the outer surface of the hollow fiber membrane is unlikely to be scraped. From the viewpoint of difficulty for the outer surface to be scraped, the BU value (outside) is preferably less than or equal to 18 and more preferably less than or equal to 17.

The BU value (outside) is preferably greater than or equal to 6. In a case where the BU value (outside) is greater than or equal to 6, the water permeability of the hollow fiber membrane improves. From the viewpoint of the water permeability, the BU value (outside) is preferably greater than or equal to 10 and more preferably greater than or equal to 13.

The BU value (outside) is preferably 6 to 19, more preferably 10 to 19, still more preferably 13 to 19, still more preferably 13 to 18, and particularly preferably 13 to 17.

In (4) of "Method for Obtaining BU Value (Outside)" in the examples, in a case where an area from the outer surface of the porous membrane layer to a boundary surface between the support and the porous membrane layer does not fit in a visual field of a magnification of 1000 times image, the BU value (outside) is obtained as follows. Method for Obtaining BU Value (Outside) in Case Where Area from Outer Surface of Porous Membrane Layer to Boundary Surface between Support and Porous Membrane Layer Does Not Fit in Visual Field of Magnification of 1000 Times Image.

(1) to (3): The same operations as those of (1) to (3) of "Method for Obtaining BU Value (Outside)" of the examples are performed.

(4) An image of a cut surface in a direction perpendicular to the longitudinal direction of the sample 1 obtained in (3) is taken at a magnification of 500 times using a scanning electron microscope so that an area from the outer surface of the porous membrane layer to a boundary surface between a support and the porous membrane layer fits in a visual field. The following (α) to (ε) are performed on the taken image.

(α) A middle point A of the outer circumference (portion appearing on the image) of the porous membrane layer is obtained, and a tangent of the outer circumference from the middle point A is drawn.

(β) The perpendicular is drawn from the middle point A with respect to the tangent drawn in (α).

(γ) A point at which the perpendicular drawn in (β) first reaches the support from the middle point A is regarded as a point B. However, in a case where there is a gap between the porous membrane layer and the support from the middle point A to the point B, the edge of the gap on the porous membrane layer side on the perpendicular is regarded as the point B.

(δ) Assuming that the length of a line segment AB is set as 100%, a point C positioned at 5% along a length from the point A on the line segment AB is obtained.

(ε) A distance LAC (μm) of a line segment AC is measured.

(5) The cut surface of the sample 1 of (4) is observed with a scanning electron microscope at a magnification of 1,000 times. At this time, the position of the cut surface of the sample 1 is adjusted so that the line segment AC fits in the visual field.

(6) Regarding the cut surface of the sample 1 of which the position is adjusted in (5), a scanning electron image (at a magnification of 1,000 times and a number of pixels of 640 × 480) in which the line segment AC fits in the visual field is taken.

(7) The image taken in (6) is subjected to the following (a) to (c) with image analysis software Image-Pro PLUS (manufactured by Media Cybernetics Inc.)

Any software in addition to the software may be used as the image analysis software as long as the following processing (a) to (c) can be performed.

(a) A photographic image is converted into an 8-bit grayscale (that is, a 256-gradation luminance scale) image.
(b) The converted image in (a) is subjected to processing of making a cumulative histogram of a luminance over the entire 256-gradation luminance scale into a linear shape.
(c) The processed image in (b) is repeatedly subjected to 5 × 5 median average processing three times.

(8) The processed image in (c) of (7) is subjected to the following (d) to (j).

(d) A middle point A' of the outer circumference (portion appearing on the image) of the porous membrane layer is obtained, and a tangent of the outer circumference from the middle point A' is drawn.
(e) The perpendicular is drawn from the middle point A' with respect to the tangent drawn in (d).
(f) A point C' positioned at the LAC (μm) obtained in (ε) of (4) from the point A' on the perpendicular of (e) is obtained.
(g) A straight line perpendicular to the perpendicular of (e) from the point C' is drawn.
(h) A line segment which is on the straight line drawn in (g), has a middle point at the point C', and has a length of 85 μm is obtained. In a case where the line segment cannot fit in the range of the image, the process returns to (6), an image is taken again while changing the visual field to be observed, and the subsequent operation is performed.
(i) A standard deviation of a luminance of all pixels constituting the line segment obtained in (h) is obtained and set as "BUC1".

(9) to (11): The same operations as those of (7) to (9) of "Method for Obtaining BU Value (Outside)" of the examples are performed.

[R Value]

The hollow fiber membrane of the present invention is a hollow fiber membrane having an R value within a range of 1.1 to 2.1.
The R value is a value obtained by dividing the BU value (inside) by the BU value (outside). The R value indicates how large the pore diameter or the number of pores is in the area close to the support of the porous membrane layer compared to the area close to the outer surface of the porous membrane layer.
In a case where the R value is greater than or equal to 1.1, the water permeability of the hollow fiber membrane tends to improve. From the viewpoint of the water permeability, the R value is preferably greater than or equal to 1.3, more preferably greater than or equal to 1.5, and still more preferably greater than or equal to 1.6.
In a case where the R value is less than or equal to 2.1, the peeling resistance of the hollow fiber membrane tends to improve. From the viewpoint of the peeling resistance, the R value is preferably less than or equal to 2.0 and more preferably less than or equal to 1.9.
The R value is preferably 1.1 to 2.0, more preferably 1.1 to 1.9, still more preferably 1.3 to 1.9, still more preferably 1.5 to 1.9, and particularly preferably 1.6 to 1.9.

[Reason that BU Value (Inside) and BU Value (Outside) Become an Index Indicating Size of Pore Diameter or Number of Pores]

In a case where the cut surface in a direction perpendicular to the longitudinal direction of the hollow fiber membrane is observed with a scanning electron microscope, pores appear dark and a portion other than the pores appears bright. In a case where there is a large hole on a specific line segment on the cut surface or the number of pores is large, unevenness in the luminance of pixels constituting the line segment becomes large and the standard deviation of the luminance increases. As described above, the BU value (inside) and the BU value (outside) are standard deviations of a luminance of all pixels constituting a specific line segment.
From the above, the BU Value (Inside) and the BU Value (Outside) become an index indicating the size of a pore diameter or the number of pores.
When obtaining the BU value (inside) and the BU value (outside), it is important to perform image processing of (b) and (c) of (5) in "Method for Obtaining BU Value (Inside)" and "Method for Obtaining BU Value (Outside)" in the examples and (b) and (c) of (7) in the methods for obtaining the BU value (inside) and the BU value (outside) in the case where an area from the outer surface of the porous membrane layer to a boundary surface between the support and the porous membrane layer does not fit in a visual field of a magnification of 1000 times image. By performing such processes of image processing, it is possible to compare the degree of the size of a pore diameter or the number of pores between different images.
In a case where there is a bright image and a dark image, the processing of making a cumulative histogram of

a luminance into a linear shape in the above-described (b) of (5) or (b) of (7) has an effect of bringing brightness levels of both the images close to each other.

The 5 × 5 median average processing of the above-described (c) of (5) and (c) of (7) has an effect of eliminating locally bright portions such as edge portions of pores.

[Peeling Resistance Performance Test]

The hollow fiber membrane of the present invention is a hollow fiber membrane in which a result of a peeling resistance performance test is 1 piece or less. The result of the peeling resistance performance test preferably is 0 pieces.

The result of the peeling resistance performance test being 1 piece or less means that the peeling resistance between the porous membrane layer and the support is favorable. For this reason, when the hollow fiber membrane is used in the water treatment field, for example, drinking water production, water purification treatment, or wastewater treatment, the hollow fiber membrane can be used for a long period of time.

The peeling resistance performance test is performed by drying a hollow fiber membrane sprayed with water using a high-pressure washing machine. And observing the presence or absence of a porous membrane layer peeling from a support with a stereo microscope. Specifically, the test can be performed through the method described in the examples.

[Water permeability]

The water permeability of the hollow fiber membrane of the present invention is preferably higher than or equal to 5 $m^3/m^2$/MPa/h, more preferably greater than or equal to 10 $m^3/m^2$/hr/MPa, and still more preferably greater than or equal to 15 $m^3/m^2$/hr/MPa.

In the case where the water permeability of the hollow fiber membrane is greater than or equal to the lower limit values, even if the hollow fiber membrane is worn, and the membrane structure is plastically deformed to cause deterioration in the water permeability, these are unlikely to affect a membrane filtration operation.

Water permeability can be determined by measuring the amount of pure water coming out from a hollow fiber membrane with one end surface of the hollow portion sealed and the other end surface connected to a container containing pure water, when air pressure is applied to the container. Specifically, the water permeability can be obtained through the method described in the examples.

[Particles rejection (%)]

The rejection of particles having a particle diameter of 48 nm in the hollow fiber membrane of the present invention is preferably greater than or equal to 90%.

In the case where the rejection of particles having a particle diameter of 48 nm is greater than or equal to 90%, high rejection performance can be obtained.

In addition, the rejection of particles having a particle diameter of 40 nm in the hollow fiber membrane of the present invention is preferably greater than or equal to 80% and more preferably greater than or equal to 90%.

In the case where the rejection of particles having a particle diameter of 40 nm is greater than or equal to 80% and preferably greater than or equal to 90%, high rejection performance can be obtained.

A hollow fiber membrane of which one end surface of the hollow portion is sealed is used to obtain the rejection of particles by measuring an absorbance of a filtrate obtained by filtering a test solution containing particles having a specific particle diameter. Specifically, the rejection can be obtained through the method described in the examples.

[Production Method for Obtaining Hollow Fiber Membrane of First Embodiment of Present Invention]

A hollow fiber membrane according to a first embodiment of the present invention includes: an inner layer in which a porous membrane layer is disposed in contact with an outer circumferential surface of a support; and an outer layer which is in contact with the inner layer and is disposed on an outer circumferential surface (surface on a side opposite to the support) of the inner layer.

Hereinafter, the present embodiment will be appropriately described in detail with reference to Fig. 1.

(Membrane-Forming Stock Solution)

In the production of the hollow fiber membrane of the present embodiment, polyvinylidene fluoride (hereinafter, also referred to as "PVDF") and polyvinyl pyrrolidone (hereinafter, also referred to as "PVP") are first dissolved in a solvent to prepare a membrane-forming stock solution.

The membrane-forming stock solution is applied to an outer circumferential surface of a support, and the solvent is removed to form a porous membrane layer of the hollow fiber membrane. Accordingly, the porous membrane layer of the hollow fiber membrane of the present embodiment contains PVDF and PVP.

The membrane-forming stock solution is obtained by dissolving PVDF and PVP in a solvent. At this time, a solvent may be further added thereto to dilute the membrane-forming stock solution so that each of the above-described components has a desired concentration.

In order to improve peeling resistance between the support and the porous membrane layer of the hollow fiber membrane, it is preferable that the porous membrane layer cover the support as well as the support and the porous membrane layer come into contact with the outer circumferential surface of the support. That is, it is preferable that the contact area between the support and the porous membrane layer become large. Accordingly, it is preferable to determine the concentration of each of the above-described components in consideration of a viscosity of the membrane-forming stock solution.

The membrane-forming stock solution may be in a state in which part of PVDF and PVP is dispersed in a solvent without dissolving therein as long as uniformity can be maintained.

In addition, when preparing the membrane-forming stock solution, PVDF and PVP may dissolve or be dispersed in a solvent while heating the solvent as long as the temperature is below the boiling point of the solvent. At this time, the prepared membrane-forming stock solution may be further cooled as necessary after the dissolution or the dispersion of PVDF and PVP.

(PVDF)

The mass average molecular weight (Mw) of PVDF contained in a membrane-forming stock solution is preferably $5.0 \times 10^5$ to $8.0 \times 10^5$, and preferably $5.0 \times 10^5$ to $7.5 \times 10^5$.

In the case where the mass average molecular weight (Mw) of PVDF contained in a membrane-forming stock solution is greater than or equal to the lower limit values, it is possible to secure the peeling resistance of a hollow fiber membrane to be formed. In addition, in the case where the mass average molecular weight (Mw) of PVDF contained in a membrane-forming stock solution is less than or equal to the upper limit values, it is possible to enlarge the pore diameter of a hollow fiber membrane and to secure water permeability.

The molecular weight distribution (ratio (Mw/Mn) of mass average molecular weight (Mw) to number average molecular weight (Mn)) of PVDF contained in a membrane-forming stock solution is preferably less than or equal to 5.5.

In the case where the molecular weight distribution of PVDF contained in a membrane-forming stock solution is less than or equal to the upper limit value, variation in pore diameter of a hollow fiber membrane is unlikely to occur.

There is no limitation to using PVDF having a single mass average molecular weight (Mw) or molecular weight distribution for PVDF to be added to a membrane-forming stock solution. For example, PVDFs having different mass average molecular weights (Mw) or molecular weight distributions may be combined with each other and added to the membrane-forming stock solution while adjusting the final mass average molecular weight (Mw) or molecular weight distribution to be within the above-described ranges.

(PVP)

The K value of PVP contained in a membrane-forming stock solution is preferably 15 to 45 and more preferably 20 to 40.

The "K value" in the present invention is a viscosity characteristic value correlating with a molecular weight, and can be calculated by, for example, applying a relative viscosity value (at 25°C) measured with a capillary viscometer to the Fikentscher's equation represented by the following Equation (1).

$$K = (1.5 \log\eta_{rel}-1) / (0.15 + 0.003c) + (300 \, c\log\eta_{rel} + (c + 1.5 \, c\log\eta_{rel})^2)^{1/2} / (0.15c + 0.003c^2) \cdots (1)$$

In the above-described Equation (1), $\eta_{rel}$ is a relative viscosity of a PVP solution to water, and c is a PVP concentration (%) in a PVP solution.

In a case where PVP having a K value of less than or equal to the upper limit values, that is, having a relatively low viscosity, is used, removal of PVP contained in a porous membrane precursor layer to be described below becomes easy.

In the present embodiment, in a case where a membrane-forming stock solution contains an appropriate amount of PVP having a K value within this range, it is possible to control the pore diameter of a hollow fiber membrane and to

secure a water permeability.

There is no limitation to using PVP having a single K value for PVP to be added to a membrane-forming stock solution. For example, PVPs having different K values may be combined with each other and added to the membrane-forming stock solution while adjusting the final K value to be within the above-described range.

(Content of PVDF and PVP in Membrane-Forming Stock Solution)

• Membrane-forming stock solution for outer layer

The content of PVDF in a membrane-forming stock solution for an outer layer is preferably 17 to 23 mass% based on the total mass (100 mass%) of the membrane-forming stock solution.

In the case where the content of PVDF in a membrane-forming stock solution for an outer layer is greater than or equal to the lower limit value, oxidation deterioration resistance, chemical resistance, heat resistance, and mechanical durability can be imparted to a hollow fiber membrane.

In addition, in the case where the content of PVDF in a membrane-forming stock solution for an outer layer is less than or equal to the upper limit value, solubility in a solvent becomes favorable.

The content of PVP in a membrane-forming stock solution for an outer layer is preferably 14 to 23 mass% and more preferably 18 to 21 mass% based on the total mass (100 mass%) of the membrane-forming stock solution.

In the case where the content of PVP in a membrane-forming stock solution for an outer layer is greater than or equal to the lower limit values, a hollow fiber membrane of which favorable water permeability is secured can be formed.

In addition, in the case where the content of PVP in a membrane-forming stock solution for an outer layer is less than or equal to the upper limit values, a hollow fiber membrane having excellent peeling resistance can be formed.

In the content of PVDF and PVP in the membrane-forming stock solution for an outer layer, the content of PVDF in a membrane-forming stock solution for an outer layer is preferably larger than that of PVP in the membrane-forming stock solution for an outer layer.

In the case where the content of PVDF in a membrane-forming stock solution for an outer layer is larger than that of PVP in the membrane-forming stock solution for an outer layer, a porous membrane layer of the outer layer becomes denser. Therefore, the outer surface of the porous membrane layer is unlikely to be scraped, and a hollow fiber membrane having excellent peeling resistance can be formed.

• Membrane-forming stock solution for inner layer

The content of PVDF in a membrane-forming stock solution for an inner layer is preferably 17 to 23 mass% based on the total mass (100 mass%) of the membrane-forming stock solution.

In the case where the content of PVDF in a membrane-forming stock solution for an inner layer is greater than or equal to the lower limit value, oxidation deterioration resistance, chemical resistance, heat resistance, and mechanical durability can be imparted to a hollow fiber membrane.

In addition, in the case where the content of PVDF in a membrane-forming stock solution for an inner layer is less than or equal to the upper limit value, solubility in a solvent becomes favorable.

The content of PVP in a membrane-forming stock solution for an inner layer is preferably 17 to 23 mass% and more preferably 18 to 21 mass% based on the total mass (100 mass%) of the membrane-forming stock solution.

In the case where the content of PVP in a membrane-forming stock solution for an inner layer is greater than or equal to the lower limit values, a hollow fiber membrane of which favorable water permeability is secured can be formed.

In addition, in the case where the content of PVP in a membrane-forming stock solution for an inner layer is less than or equal to the upper limit values, a hollow fiber membrane having excellent peeling resistance can be formed.

(Total Amount of Content of PVDF and Content of PVP in Membrane-Forming Stock Solution for Inner Layer)

The total amount of the content of PVDF in a membrane-forming stock solution for an inner layer and the content of PVP in the membrane-forming stock solution for an inner layer with respect to the total mass (100 mass%) of the membrane-forming stock solution for an inner layer is preferably greater than or equal to 37 mass%, more preferably greater than or equal to 38 mass%, and still more preferably greater than or equal to 39 mass%.

In the case where the total content of PVDF and PVP in the membrane-forming stock solution for an inner layer is greater than or equal to the lower limit values, it is possible to reduce the content of solvent in the membrane-forming stock solution for an inner layer. Therefore, there is a tendency for dynamic strength of a porous membrane layer of an obtained hollow fiber membrane to easily increase, and the adhesiveness between the porous membrane layer and a support increases. Accordingly, peeling is unlikely to occur.

(Difference between Content of PVDF and Content of PVP in Membrane-Forming Stock Solution)

A value obtained by subtracting the content of PVDF in a membrane-forming stock solution (whole membrane-forming stock solution obtained by combining a membrane-forming stock solution for an outer layer with a membrane-forming stock solution for an inner layer) from the content of PVP in the membrane-forming stock solution (whole membrane-forming stock solution obtained by combining a membrane-forming stock solution for an outer layer with a membrane-forming stock solution for an inner layer) is preferably less than or equal to 5 mass%, more preferably less than or equal to 3 mass%, and still more preferably less than or equal to 1 mass%.

In the case where a value obtained by subtracting the content of PVDF from the content of PVP in the whole membrane-forming stock solution obtained by combining a membrane-forming stock solution for an outer layer with a membrane-forming stock solution for an inner layer is less than or equal to the upper limit values, the content of PVP in the whole membrane-forming stock solution obtained by combining a membrane-forming stock solution for an outer layer with a membrane-forming stock solution for an inner layer does not become excessive with respect to the content of PVDF. As a result, the density of a porous membrane layer of an obtained hollow fiber membrane increases, and peeling between the porous membrane layer and a support is unlikely to occur.

(Solvent)

The solvent to be used for a membrane-forming stock solution is not particularly limited as long as PVDF and PVP can dissolve therein, and examples thereof include dimethyl sulfoxide, dimethylacetamide, and dimethylformamide.

In addition, the content of a solvent to the total mass (100 mass%) of a membrane-forming stock solution is preferably within a range of 50 to 69 mass%.

In the case where the content of a solvent with respect to a membrane-forming stock solution is greater than or equal to the lower limit value, it is possible to form a hollow fiber membrane having excellent water permeability. In addition, a porous membrane precursor layer is easily formed on a support as long as the content is less than or equal to the upper limit value.

The content of a solvent to the total mass (100 mass%) of a membrane-forming stock solution is more preferably 52 to 66 mass% and still more preferably 54 to 62 mass%.

(Coating of Outer Circumferential Surface of Support with Membrane-Forming Stock Solution for Inner Layer and Coating of Outer Circumferential Surface of Coated Membrane-Forming Stock Solution for Inner Layer with Membrane-Forming Stock Solution for Outer Layer)

In the production of the hollow fiber membrane of the present embodiment, an outer circumferential surface of a support is coated with a membrane-forming stock solution for an inner layer, and an outer circumferential surface of the coated membrane-forming stock solution for an inner layer is coated with membrane-forming stock solution for an outer layer. By performing such coating, the hollow fiber membrane includes the support and a porous membrane layer disposed on the outer circumferential surface of the support, and the porous membrane layer includes an inner layer disposed in contact with the outer circumferential surface of the support and an outer layer which is in contact with the inner layer and is disposed on an outer circumferential surface (surface on a side opposite to the support) of the inner layer.

The following method can be used for coating a support with a membrane-forming stock solution.

A support is made to pass through a center portion of a double-tube nozzle 3. Membrane-forming stock solutions (membrane-forming stock solution for an inner layer and membrane-forming stock solution for an outer layer) are respectively sent from two stock solution supply devices 2 to the double-tube nozzle 3. These membrane-forming stock solutions are discharged from an outside of the center portion of the double-tube nozzle. Thereafter, the support is coated with the membrane-forming stock solutions immediately after the support and the membrane-forming stock solutions come out of the double-tube nozzle.

(Coagulation in Coagulation Solution at 55°C to 75°C After Subjecting Support to Motion in Air)

In the production of the hollow fiber membrane of the present embodiment, an outer circumferential surface of a support is coated with a membrane-forming stock solution for an inner layer and a membrane-forming stock solution for an outer layer and is subjected to motion in air, and then, the membrane-forming stock solutions are coagulated in a coagulation solution at 55°C to 75°C which has been accommodated in a coagulation bath 5.

In the case where the support coated with the membrane-forming stock solutions is subjected to motion in air, moisture of the membrane-forming stock solutions can be absorbed and the pore diameter of the outer surface of the hollow fiber membrane can be controlled.

In addition, in the case where the temperature of the coagulation solution is set to 55°C to 75°C, a hollow fiber

membrane is obtained in which moisture of the membrane-forming stock solutions can be moderately absorbed, the pore diameter of the outer surface of the hollow fiber membrane can be made fine, and fine particles, for example, infiltration of particles having a particle diameter of 48 nm or 40 nm can be prevented. The temperature of the coagulation solution is preferably 57°C to 73°C and more preferably 60°C to 70°C.

The coagulation solution is not particularly limited as long as it is a solution coagulating PVDF and PVP in a membrane-forming stock solution, but a solution containing a solvent used for a membrane-forming stock solution is preferably used.

In a case where the solvent used for a membrane-forming stock solution is N,N-dimethylacetamide (hereinafter, also referred to as "DMAc") and a DMAc solution is used as a coagulation solution, the concentration of DMAc in 100 mass% of the coagulation solution is preferably 2 to 50 mass% and more preferably 5 to 30 mass%.

In the case where the concentration of DMAc in a coagulation solution is greater than or equal to the lower limit values, infiltration rate of a non-solvent into a membrane-forming stock solution becomes slow, an internal structure of the membrane-forming stock solution does not become too dense, the time until the coagulation is completed can be sufficiently secured, the porous membrane layer can be made to cover a support (a state where the contact area between the support and the porous membrane layer becomes large), and the peeling resistance of a hollow fiber membrane can improve.

In addition, in the case where the concentration of DMAc in a coagulation solution is less than or equal to the upper limit values, a sufficient amount of non-solvent can infiltrate into a membrane-forming stock solution and coagulation can be completed in a coagulation tank. Therefore, problems such as deformation in a membrane during a production process are unlikely to occur.

(Porous Membrane Precursor Layer and Hollow Fiber Membrane Precursor)

In the production of the hollow fiber membrane of the present embodiment, a membrane-forming stock solution (membrane-forming stock solution obtained by combining a membrane-forming stock solution for an inner layer, with which an outer circumferential surface of a support is coated, with a membrane-forming stock solution for an outer layer with which an outer circumferential surface (surface on a side opposite to the support) of the membrane-forming stock solution for an inner layer is coated) with which an outer circumferential surface is coated and which is coagulated by a coagulation solution refers to a "porous membrane precursor layer", and a precursor of a hollow fiber membrane having the support and the porous membrane precursor layer on the outer circumferential surface of the support refers to a "hollow fiber membrane precursor".

The hollow fiber membrane precursor includes the support and the porous membrane precursor layer which is a layer contains PVDF and PVP and is obtained by removing a solvent from the membrane-forming stock solution with which the support is coated.

(Removal of PVP Contained in Porous Membrane Precursor Layer)

In the production of the hollow fiber membrane of the present embodiment, a porous membrane layer is formed on an outer circumferential surface of a support by removing PVP from a porous membrane precursor layer.

Specifically, part or most of PVP and a solvent remaining in a hollow fiber membrane precursor is first cleaned and removed. At this time, the hollow fiber membrane precursor can be cleaned by, for example, immersing the hollow fiber membrane precursor in hot water at 40°C to 100°C and/or a solution such as sodium hypochlorite or by repeatedly immersing the hollow fiber membrane precursor therein as necessary.

The content of PVP in the cleaned hollow fiber membrane precursor is preferably 0.3 to 10 mass% and more preferably 0.5 to 5 mass% based on the total mass (100 mass%) of a dried hollow fiber membrane as described below.

The lower limit value of the content of PVP in the remaining hollow fiber membrane is a lower limit value in industrial production. In the case where the content is less than or equal to the upper limit values, adhesion between dried membranes is easily prevented and occurrence of defects or the like is easily suppressed.

Accordingly, the porous membrane layer of the hollow fiber membrane of the present embodiment contains PVDF and remaining PVP.

The content of PVP in a hollow fiber membrane is obtained from a ratio of peak top heights at specific peaks of an infrared absorption spectrum (IR spectrum) of a dried hollow fiber membrane. Specifically, the ratio can be obtained through the method described in the examples.

The cleaned hollow fiber membrane precursor is dried, for example, at a temperature of 60°C to 120°C for 1 minute to 24 hours to obtain a hollow fiber membrane.

In the case where the drying temperature of the hollow fiber membrane precursor is higher than or equal to 60°C, the drying treatment time can be shortened and production costs can be saved, which is preferable for industrial production.

In the case where the drying temperature of the hollow fiber membrane precursor is lower than or equal to 120°C, the hollow fiber membrane precursor can be suppressed from excessively shrinking, and there is a tendency for minute cracks and the like to hardly occur on the outer surface of a hollow fiber membrane.

(Membrane-Forming Stock Solution with which Outer Circumferential Surface of Support is coated and Membrane-Forming Stock Solution with which Outer Circumferential Surface of Membrane-Forming Stock Solution Thereof is Coated)

In the production of the hollow fiber membrane of the present embodiment, the membrane-forming stock solution for an inner layer (membrane-forming stock solution with which an outer circumferential surface of a support is coated) and the membrane-forming stock solution for an outer layer (membrane-forming stock solution with which an outer circumferential surface of the membrane-forming stock solution for an inner layer is coated) may be membrane-forming stock solutions having the same composition, or may be membrane-forming stock solutions having different compositions (for example, membrane-forming stock solutions having a different concentration in PVDF or PVP or having a different grade in PVDF or PVP).

In the production of the hollow fiber membrane of the present embodiment, the membrane-forming stock solution for an inner layer and the membrane-forming stock solution for an outer layer are membrane-forming stock solutions having different compositions as an aspect, and are membrane-forming stock solutions having the same composition as another aspect.

That is, in the hollow fiber membrane of the present embodiment, an inner layer and an outer layer are hollow fiber membranes which are porous membrane layers having different compositions as an aspect, and are hollow fiber membranes which are porous membrane layers having the same composition as another aspect.

In the case where a membrane-forming stock solution for an inner layer and a membrane-forming stock solution for an outer layer having different compositions are used as membrane-forming stock solutions, contribution of required performance to a hollow fiber membrane can be shared between an inner layer and an outer layer of the porous membrane layers.

For example, the membrane-forming stock solution for an inner layer is set to a membrane-forming stock solution containing 17 to 23 mass% of PVDF and 17 to 23 mass% of PVP, and the membrane-forming stock solution for an outer layer is set to a membrane-forming stock solution containing 17 to 23 mass% of PVDF and 14 to 23 mass% of PVP. In the case where membrane-forming stock solutions have different concentrations of PVDF and PVP in an inner layer and an outer layer, the inner layer of a porous membrane layer can be formed as a layer which has a high aperture ratio and secures water permeability, the outer layer of porous membrane layer can be formed as a layer which blocks fine particles and secures abrasion resistance of the surface of a membrane.

(Membrane-Forming Stock Solution further Containing Copolymer)

In the production of the hollow fiber membrane of the present embodiment, various polymers can be added to membrane-forming stock solutions for the purpose of imparting various kinds of performance to the hollow fiber membrane. Examples of the various polymers include acrylic polymers. Examples of acrylic polymers include a polymer containing a methyl (meth)acrylate unit.

The polymer containing a methyl (meth)acrylate unit may contain monomer units such as 2-hydroxyethyl (meth)acrylate, 2-hydroxypropyl (meth)acrylate, 2-hydroxybutyl (meth)acrylate, 3-hydroxybutyl (meth)acrylate, 4-hydroxybutyl (meth)acrylate, polyethylene glycol (meth)acrylate, polypropylene glycol (meth)acrylate, BLEMMER PE-400 (trade name, manufactured by NOF CORPORATION, polyethylene glycol methacrylate (in which a chain number of ethylene glycol is 9)), BLEMMER AE-400 (trade name, manufactured by NOF CORPORATION, polyethylene glycol acrylate (in which a chain number of ethylene glycol is 9)), ethyl (meth)acrylate, n-propyl (meth)acrylate, isopropyl (meth)acrylate, n-butyl (meth)acrylate, isobutyl (meth)acrylate, t-butyl (meth)acrylate, isoamyl (meth)acrylate, hexyl (meth)acrylate, octyl (meth)acrylate, lauryl (meth)acrylate, dodecyl (meth)acrylate, stearyl (meth)acrylate, phenyl (meth)acrylate, benzyl (meth)acrylate, glycidyl (meth)acrylate, 2-ethylhexyl (meth)acrylate, Praxel FM (trade name, manufactured by Daicel Corporation; caprolactone-added monomer), methoxyethyl methacrylate, ethoxyethyl (meth)acrylate, normal-butoxyethyl (meth)acrylate, isobutoxyethyl (meth)acrylate, t-butoxyethyl (meth)acrylate, phenoxyethyl (meth)acrylate, nonylphenoxyethyl (meth)acrylate, 3-methoxybutyl (meth)acrylate, BLEMMER PME-100 (trade name, manufactured by NOF CORPORATION, methoxypolyethylene glycol methacrylate (in which a chain number of ethylene glycol is 2)), BLEMMER PME-200 (trade name, manufactured by NOF CORPORATION, methoxypolyethylene glycol methacrylate (in which a chain number of ethylene glycol is 4)), BLEMMER PME-400 (trade name, manufactured by NOF CORPORATION, methoxypolyethylene glycol methacrylate (in which a chain number of ethylene glycol is 9)), BLEMMER 50POEP-800B (trade name, manufactured by NOF CORPORATION, octoxy polyethylene glycol polypropylene glycol methacrylate (in which a chain number of ethylene glycol is 8 and a chain number of propylene glycol is

6)), and BLEMMER 20ANEP-600 (trade name, manufactured by NOF CORPORATION, nonylphenoxy (ethylene glycol-polypropylene glycol) monoacrylate)).

In the production of the hollow fiber membrane of the present embodiment, it is preferable that the membrane-forming stock solutions further contain copolymers (hereinafter, also simply referred to as "copolymers") having a 2-methoxyethyl acrylate (hereinafter, also referred to as "MEA") unit and a hydroxyl group-containing (meth)acrylate unit as examples of the acrylic polymers, and a macromonomer unit represented by the following Formula (1).

Accordingly, it is preferable that the porous membrane layer of the hollow fiber membrane of the present embodiment further contain copolymers.

In the case where the membrane-forming stock solutions contain the copolymers, hydrophilicity and fouling resistance are imparted to the porous membrane layer.

A copolymer may be contained in a membrane-forming stock solution for an inner layer, in a membrane-forming stock solution for an outer layer, or in both of the membrane-forming stock solution for an inner layer and the membrane-forming stock solution for an outer layer.

A copolymer may have a macromonomer unit in its main chain, may have a macromonomer unit in its side chain, and may have a mixture thereof.

In the case where a copolymer is contained in one or both of the membrane-forming stock solution for an inner layer and the membrane-forming stock solution for an outer layer, the content of copolymer in a membrane-forming stock solution is preferably 0.1 to 10 mass% based on the total mass (100 mass%) of the membrane-forming stock solution (membrane-forming stock solution for an inner layer or membrane-forming stock solution for an outer layer, or a membrane-forming stock solution obtained by combining these).

In the case where the content of copolymer in a membrane-forming stock solution is greater than or equal to the lower limit value, hydrophilicity and fouling resistance are easily imparted to the porous membrane layer.

In addition, in the case where the content of copolymer in a membrane-forming stock solution is less than or equal to the upper limit value, mechanical properties of a porous membrane are easily maintained.

(MEA Unit)

An MEA unit is one of constitutional units of a copolymer. In the case where a copolymer has a MEA unit, sludge is unlikely to be attached to a porous membrane layer when a hollow fiber membrane is used, for example, in a membrane bio-reactor(MBR method), and fouling resistance is imparted to a porous membrane layer.

(Hydroxyl Group-Containing (Meth)Acrylate Unit)

A hydroxyl group-containing (meth)acrylate unit is one of constitutional units of a copolymer. In the case where a copolymer has a hydroxyl group-containing (meth)acrylate unit, hydrophilicity is imparted to a porous membrane layer.

In the present specification, "(meth)acrylic acid" is a generic term of an acrylic acid and a methacrylic acid, and "(meth)acrylate" is a generic term of acrylate and methacrylate.

Examples of hydroxyl group-containing (meth)acrylate include 2-hydroxyethyl (meth)acrylate, 2-hydroxypropyl (meth)acrylate, 3-hydroxypropyl (meth)acrylate, 2-hydroxybutyl (meth)acrylate, 3-hydroxybutyl (meth)acrylate, 4-hydroxybutyl (meth)acrylate, polyethylene glycol (meth)acrylate, and polypropylene glycol (meth)acrylate.

(Macromonomer)

A macromonomer unit is one of constitutional units of a copolymer. In the case where a copolymer has a macromonomer unit, the copolymer can be immobilized on a porous membrane, and a porous membrane having excellent physical resistance and chemical resistance can be obtained.

The macromonomer unit has a partial structure represented by the following Formula (1). The macromonomer unit in the following Formula (1) may be present in a main chain of a copolymer or in a side chain of the copolymer.

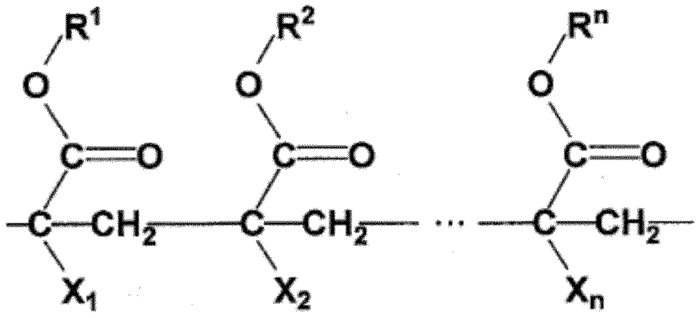

(1)

In the above-described Formula (1), $R^1$ to $R^n$ each independently represent a hydrogen atom, an alkyl group, a cycloalkyl group, an aryl group, or a heterocyclic group, $X_1$ to $X_n$ each independently represent a hydrogen atom or a methyl group, and n represents an integer of 3 to 10,000.

In Formula (1), $R^1$ to $R^n$ each independently represent a hydrogen atom, an alkyl group, a cycloalkyl group, an aryl group, or a heterocyclic group.

At least one hydrogen atom of an alkyl group, a cycloalkyl group, an aryl group, a heterocyclic group may be substituted with a substituent to be described below.

Examples of alkyl groups include linear alkyl groups having 1 to 20 carbon atoms, and specific examples thereof include a methyl group, an ethyl group, an n-propyl group, and an i-propyl group.

Examples of cycloalkyl groups include cycloalkyl groups having 3 to 20 carbon atoms, and specific examples thereof include a cyclopropyl group, a cyclobutyl group, and an adamantyl group.

Examples of aryl groups include aryl groups having 6 to 18 carbon atoms, and specific examples thereof include a phenyl group and a naphthyl group.

Examples of heterocyclic groups include heterocyclic groups which have 5 to 18 carbon atoms and have a nitrogen atom, an oxygen atom, and/or a sulfur atom, and specific examples thereof include $\gamma$-lactone group and $\varepsilon$-caprolactone.

Examples of substituents in $R^1$ to $R^n$ include an alkyl group, an aryl group, a carboxy group, an alkoxycarbonyl group (-COOR'), a cyano group, a hydroxy group, an amino group, an amide group (-CONR'R"), a halogen atom, an allyl group, an epoxy group, an alkoxy group (-OR'), and a group showing hydrophilicity or ionicity. R' and R" each independently represent a hydrogen atom, an alkyl group, a cycloalkyl group, or an aryl group.

Examples of alkoxycarbonyl groups as substituents include a methoxycarbonyl group.

Examples of amide groups as substituents include a dimethylamide group.

Examples of halogen atoms as substituents include a fluorine atom, a chlorine atom, a bromine atom, and an iodine atom.

Examples of alkoxy groups as substituents include alkoxy groups having 1 to 12 carbon atoms, and specific examples thereof include a methoxy group.

Examples of groups showing hydrophilicity or ionicity include an alkali salt of a carboxy group (-COOH), an alkali salt of a sulfoxyl group ($-SO_3H$), a poly(alkylene oxide) group (such as a polyethylene oxide group and a polypropylene oxide group), and a cationic substituent (such as a quaternary ammonium salt group).

$R^1$ to $R^n$ is preferably at least one selected from the group consisting of an alkyl group and cycloalkyl group, and more preferably an alkyl group. The alkyl group is preferably a methyl group, an ethyl group, an n-propyl group, or an i-propyl group, and more preferably a methyl group from the viewpoint of availability of a macromonomer.

In Formula (1), $X_1$ to $X_n$ each independently represent a hydrogen atom or a methyl group, and are preferably a methyl group. It is preferable that more than half of $X_1$ to $X_n$ be a methyl group from the viewpoint of easy synthesis of a macromonomer. Examples of methods for confirming that more than half of $X_1$ to $X_n$ is a methyl group include an analysis method using a well-known magnetic resonance spectrum (NMR).

Examples of a (meth)acrylic acid ester constituting a poly(meth)acrylic acid ester segment (skeleton) in a macromonomer include methyl (meth)acrylate, ethyl (meth)acrylate, n-propyl (meth)acrylate, isopropyl (meth)acrylate, n-butyl (meth)acrylate, isobutyl (meth)acrylate, s-butyl (meth)acrylate, t-butyl (meth)acrylate, isoamyl (meth)acrylate, hexyl (meth)acrylate, octyl (meth)acrylate, lauryl (meth)acrylate, dodecyl (meth)acrylate, stearyl (meth)acrylate, phenyl (meth)acrylate, benzyl (meth)acrylate, glycidyl (meth)acrylate, 2-ethylhexyl (meth)acrylate, 2-hydroxyethyl (meth)acrylate, 2-hydroxypropyl (meth)acrylate, 3-hydroxypropyl (meth)acrylate, 2-hydroxybutyl (meth)acrylate, 3-hydroxybutyl (meth)acrylate, 4-hydroxybutyl (meth)acrylate, polyethylene glycol (meth)acrylate, polypropylene glycol (meth)acrylate, methoxyethyl (meth)acrylate, ethoxyethyl (meth)acrylate, n- butoxyethyl (meth)acrylate, isobutoxyethyl (meth)acrylate, t-butoxyethyl (meth)acrylate, phenoxyethyl (meth)acrylate, nonylphenoxyethyl (meth)acrylate, 3-methoxybutyl (meth)acrylate, Praxel FM (trade name, manufactured by Daicel Corporation, unsaturated fatty acid hydroxyalkyl-modified ε-caprolactone), BLEMMER (registered trademark) PME-100 (trade name, manufactured by NOF CORPORATION, methoxypolyethylene glycol methacrylate (in which a chain number of ethylene glycol is 2)), BLEMMER PME-200 (trade name, manufactured by NOF CORPORATION, methoxypolyethylene glycol methacrylate (in which a chain number of ethylene glycol is 4)), BLEMMER PME-400 (trade name, manufactured by NOF CORPORATION, methoxypolyethylene glycol methacrylate (in which a chain number of ethylene glycol is 9)), BLEMMER 50POEP-800B (trade name, manufactured by NOF CORPORATION, octoxy polyethylene glycol polypropylene glycol methacrylate (in which a chain number of ethylene glycol is 8 and a chain number of propylene glycol is 6)), BLEMMER 20ANEP-600 (trade name, manufactured by NOF CORPORATION, nonylphenoxy (ethylene glycol-polypropylene glycol) monoacrylate)), BLEMMER AME-100 (trade name, manufactured by NOF CORPORATION) BLEMMER AME-200 (trade name, manufactured by NOF CORPORATION), and BLEMMER 50AOEP-800B (trade name, manufactured by NOF CORPORATION).

As (meth)acrylic acid esters, from the viewpoint of easy availability of a monomer and mechanical properties of a copolymer, methacrylic acid esters are preferable, methyl methacrylate, n-butyl methacrylate, lauryl methacrylate, dodecyl methacrylate, stearyl methacrylate, 2-ethylhexyl methacrylate, glycidyl methacrylate, 2-hydroxyethyl methacrylate, 4-hydroxybutyl methacrylate, BLEMMER PME-100, BLEMMER PME-200, or BLEMMER PME-400 is more preferable, and methyl methacrylate, n-butyl methacrylate, 2-ethylhexyl methacrylate, 2-hydroxyethyl methacrylate, 4-hydroxybutyl methacrylate, BLEMMER PME-100, BLEMMER PME-200, or BLEMMER PME-400 is still more preferable, and methyl methacrylate is particularly preferable from the viewpoint of favorable compatibility with PVDF.

(Meth)acrylic acid esters may be used singly or in combination of two or more thereof.

The number average molecular weight (Mn) of a macromonomer is preferably 1,000 to 1,000,000, more preferably 3,000 to 80,000, still more preferably 5,000 to 60,000, and particularly preferably 10,000 to 50,000 from the viewpoint of the balance of mechanical properties of a copolymer.

The molecular weight distribution (Mw/Mn) of a macromonomer is preferably 1.5 to 5.0 from the viewpoint of the balance of mechanical properties of a copolymer.

Mn and Mw/Mn of a macromonomer are obtained through GPC using polymethyl methacrylate as a standard sample.

Macromonomers may be used singly or in combination of two or more thereof.

Examples of methods for producing a macromonomer include a production method using a cobalt chain transfer agent (for example, United States Patent No. 4,680,352), a method of using an α-substituted unsaturated compound such as α-bromomethylstyrene as a chain transfer agent (for example, PCT International Publication No. WO88/04,304), a method for chemically bonding a polymerizable group (for example, Japanese Unexamined Patent Application, First Publication No. S60-133007 and United States Patent No. 5,147,952), and a method performed through thermal decomposition (for example, Japanese Unexamined Patent Application, First Publication No. H11-240854).

A production method using a cobalt chain transfer agent is preferable as the method for producing a macromonomer from the viewpoint that a macromonomer can be efficiently produced.

Examples of a method for polymerizing a (meth)acrylic acid ester when producing a macromonomer include a bulk polymerization method, a solution polymerization method, an aqueous dispersion polymerization method (such as a suspension polymerization method or an emulsion polymerization method).

A solution polymerization method or an aqueous dispersion polymerization method (such as a suspension polymerization method or an emulsion polymerization method) is preferable as the polymerization method from the viewpoint of simplification of a step of recovering a macromonomer.

Examples of a solvent used for the solution polymerization method include hydrocarbons (such as toluene), ethers (such as diethyl ether and tetrahydrofuran), halogenated hydrocarbons (such as dichloromethane and chloroform), ketones (such as acetone), alcohols (such as methanol), nitriles (such as acetonitrile), esters (such as ethyl acetate), carbonate (such as ethylene carbonate), and supercritical carbon dioxide.

Solvents may be used singly or in combination of two or more thereof.

A method including a step of reacting a solvent, a (meth)acrylic acid ester, a polymerization initiator, and a chain transfer agent with each other at 25°C to 200°C for 0.5 to 24 hours is preferable as the method for producing a macromonomer.

(Other Monomer Units)

A copolymer can have other monomer units.

Other monomers are not particularly limited as long as those can be polymerized with MEA.

As other monomers, ethyl (meth)acrylate, n-propyl (meth)acrylate, isopropyl (meth)acrylate, n-butyl (meth)acrylate, isobutyl (meth)acrylate, s-butyl (meth)acrylate, t-butyl (meth)acrylate, isoamyl (meth)acrylate, hexyl (meth)acrylate, octyl (meth)acrylate, nonyl (meth)acrylate, decyl (meth)acrylate, undecyl (meth)acrylate, lauryl (meth)acrylate, tridecyl (meth)acrylate, tetradecyl (meth)acrylate, pentadecyl (meth)acrylate, phenyl (meth)acrylate, benzyl (meth)acrylate, glycidyl (meth)acrylate, 2-ethylhexyl (meth)acrylate, Praxel FM (trade name, manufactured by Daicel Corporation, a caprolactone-added monomer), methoxyethyl methacrylate, ethoxyethyl (meth)acrylate, normal-butoxyethyl (meth)acrylate, isobutoxyethyl (meth)acrylate, t-butoxyethyl (meth)acrylate, phenoxyethyl (meth)acrylate, nonylphenoxyethyl (meth)acrylate, 3-methoxybutyl (meth)acrylate, BLEMMER PME-100 (trade name, manufactured by NOF CORPORATION, methoxyethyl methacrylate (in which a chain number of ethylene glycol is 2)), BLEMMER PME-200 (trade name, manufactured by NOF CORPORATION, methoxyethyl methacrylate (in which a chain number of ethylene glycol is 4)), 2-methacryloyloxyethyl phosphorylcholine, dimethylaminoethyl methacrylate, dimethylaminoethyl methacrylate methyl chloride salts, dimethylaminoethyl methacrylate methyl sulfate, 3-(methacrylate) propyltrimethylammonium chloride, 3-(methacrylamide) propyltrimethylammonium methyl sulfate, dimethylaminoethyl methacrylate quaternary salts, and the like are preferable from the viewpoint of solubility of a copolymer in a solvent.

Other monomers may be used singly or in combination of two or more thereof.

(Proportion of Each Unit in Copolymer)

The proportion of MEA units in a copolymer is preferably 20 to 98.9 mass%, more preferably 20 to 95 mass%, still more preferably 30 to 90 mass%, and particularly preferably 40 to 85 mass% based on all the constitutional units (100 mass%) constituting the copolymer.

In the case where the proportion of MEA units in a copolymer is greater than or equal to the lower limit values, hydrophilicity, water permeability, and fouling resistance can be imparted to a hollow fiber membrane. In addition, since a copolymer substantially becomes water-insoluble, there is little concern about elution in an environment of using the copolymer.

In the case where the proportion of MEA units in a copolymer is less than or equal to the upper limit values, effects of hydroxyl group-containing (meth)acrylate units and macromonomer units can be sufficiently exhibited.

The proportion of hydroxyl group-containing (meth)acrylate units in a copolymer is preferably 0.1 to 40 mass%, more preferably 0.5 to 38 mass%, and still more preferably 0.8 to 35 mass% based on all the constitutional units (100 mass%) constituting the copolymer.

In the case where the proportion of hydroxyl group-containing (meth)acrylate units in a copolymer is greater than or equal to the lower limit values, hydrophilicity of a hollow fiber membrane is improved.

In the case where the proportion of hydroxyl group-containing (meth)acrylate units in a copolymer is less than or equal to the upper limit values, the copolymer is unlikely to be dissolved in water, and therefore, the copolymer is unlikely to bleed out from a porous membrane layer.

The proportion of macromonomer units in a copolymer is preferably 1 to 60 mass%, more preferably 5 to 50 mass%, and still more preferably 20 to 45 mass% based on all the constitutional units (100 mass%) constituting the copolymer.

In the case where the proportion of macromonomer units in a copolymer is greater than or equal to the lower limit values, the copolymer is unlikely to fall off from a porous membrane layer. In addition, the flexibility of a porous membrane improves.

In the case where the proportion of macromonomer units in a copolymer is less than or equal to the upper limit values, there is a tendency for the fouling resistance of a hollow fiber membrane not to be impaired.

(Molecular Weight and Form of Copolymer)

The number average molecular weight (Mn) of a copolymer is preferably 1,000 to 5,000,000, more preferably 2,000 to 500,000, and still more preferably 5,000 to 300,000.

In the case where Mn of a copolymer is within the ranges, there is a tendency for the thermal stability of a copolymer and the mechanical strength or hydrophilicity of a porous membrane to increase.

Mn of a copolymer is obtained through gel permeation chromatography (GPC) in which polystyrene is used as a standard sample.

One type of copolymer may be used singly, or two or more polymers having different unit proportions, molecular weight distributions, or molecular weights may be used in combination.

The copolymer may be a random copolymer, a block copolymer, or a graft copolymer.

In a case of synthesizing a random copolymer, a method of using well-known free radical polymerization is convenient.

In the case of synthesizing a block copolymer or a graft copolymer, a method of using well-known controlled radical polymerization is convenient.

(Method for Producing Copolymer)

Examples of a method for polymerizing a monomer component when producing a copolymer include a solution

polymerization method.

The solvent used for a solution polymerization method is not particularly limited as long as a copolymer is soluble therein. In a case where a polymerization solution after polymerization is used in a membrane-forming stock solution as it is, a solvent in which PVDF and PVP can dissolve is preferable.

Examples of solvents include acetone, N,N-dimethylformamide (DMF), N,N-dimethylacetamide (DMAc), dimethyl sulfoxide (DMSO), N-methylpyrrolidone (NMP), hexamethylphosphoric acid triamide, tetramethylurea, triethyl phosphate, and trimethyl phosphate. Acetone, DMF, DMAc, DMSO, and NMP are preferable as solvents from the viewpoints of easy handling and excellent solubility of PVDF, PVP, and a copolymer.

Solvents may be used singly or in combination of two or more thereof.

When polymerizing a monomer component, a chain transfer agent or a radical polymerization initiator may be used.

The chain transfer agent controls the molecular weight of a copolymer. Examples of chain transfer agents include mercaptan, hydrogen, $\alpha$-methylstyrene, and terpenoid.

Chain transfer agents may be used singly or in combination of two or more thereof.

Examples of radical polymerization initiators include organic peroxide and an azo compound.

Examples of organic peroxide include 2,4-dichlorobenzoyl peroxide, t-butyl peroxypivalate, o-methylbenzoyl peroxide, bis-3,5,5-trimethylhexanoyl peroxide, octanoyl peroxide, t-butyl peroxy-2-ethylhexanoate, cyclohexanone peroxide, benzoyl peroxide, methyl ethyl ketone peroxide, dicumyl peroxide, lauroyl peroxide, diisopropylbenzene hydroperoxide, t-butyl hydroperoxide, di-t-butyl peroxide.

Examples of azo compounds include 2,2'-azobisisobutyronitrile (AIBN), 2,2'-azobis (2,4-dimethylvaleronitrile), and 2,2'-azobis (2,4-dimethyl-4-methoxyvaleronitrile).

Benzoyl peroxide, AIBN, 2,2'-azobis (2,4-dimethylvaleronitrile), and 2,2'-azobis (2,4-dimethyl-4-methoxyvaleronitrile) are preferable as radical polymerization initiators from the viewpoint of having a half-life temperature suitable for polymerization conditions.

Radical polymerization initiators may be used singly or in combination of two or more thereof.

The amount of radical polymerization initiator to be added is preferably 0.0001 to 10 parts by mass based on 100 parts by mass of a monomer component.

The polymerization temperature when polymerizing a monomer component is preferably -100°C to 250°C and more preferably 0°C to 200°C in consideration of the boiling point of a solvent or a temperature range of using a radical polymerization initiator.

In the case where a copolymer is produced through a solution polymerization method, a polymerization solution after polymerization can be used for production of a membrane-forming stock solution as it is.

[Production Method for Obtaining Hollow Fiber Membrane of Second Embodiment of Present Invention]

In a hollow fiber membrane according to a second embodiment of the present invention, a porous membrane layer is a single layer.

In the production of the hollow fiber membrane of the present embodiment, an outer circumferential surface of a support is coated once with one kind of membrane-forming stock solution.

The hollow fiber membrane of the present embodiment is the same as the hollow fiber membrane according to the first embodiment of the present invention obtained in a case where a membrane-forming stock solution for an inner layer (membrane-forming stock solution with which an outer circumferential surface of a support is coated) and a membrane-forming stock solution for an outer layer (membrane-forming stock solution with which an outer circumferential surface of the membrane-forming stock solution for an inner layer is coated) are membrane-forming stock solutions having the same composition.

The hollow fiber membrane of the present embodiment can be produced using a hollow fiber membrane-forming device of Fig. 2, and can be produced in the same manner as the hollow fiber membrane produced in the first embodiment except for "Coating of Outer Circumferential Surface of Support with Membrane-Forming Stock Solution", "Membrane-Forming Stock Solution", "Total Amount of Content of PVDF and Content of PVP in Membrane-Forming Stock Solution", and "Difference Between Content of PVP and Content of PVDF in Membrane-Forming Stock Solution".

(Coating of Outer Circumferential Surface of Support with Membrane-Forming Stock Solution)

In the production of the hollow fiber membrane of the present embodiment, the following method can be used for coating a support with a membrane-forming stock solution.

A support is made to pass through a center portion of a double-tube nozzle 3. A membrane-forming stock solution is sent from one stock solution supply device 2 to the double-tube nozzle 3. This membrane-forming stock solution is discharged from an outside of the center portion of the double-tube nozzle. Thereafter, the support is coated

with the membrane-forming stock solution immediately after the support and the membrane-forming stock solution come out of the double-tube nozzle.

(Membrane-Forming Stock Solution)

The content of PVDF in a membrane-forming stock solution in the production of the hollow fiber membrane of the present embodiment is preferably 17 to 23 mass% based on the total mass (100 mass%) of the membrane-forming stock solution.
In the case where the content of PVDF in a membrane-forming stock solution is greater than or equal to the lower limit value, oxidation deterioration resistance, chemical resistance, heat resistance, and mechanical durability can be imparted to a hollow fiber membrane.
In addition, in the case where the content of PVDF in a membrane-forming stock solution is less than or equal to the upper limit value, solubility in a solvent becomes favorable.
The content of PVP in a membrane-forming stock solution in the production of the hollow fiber membrane of the present embodiment is preferably 17 to 23 mass% based on the total mass (100 mass%) of the membrane-forming stock solution.
In the case where the content of PVP in a membrane-forming stock solution is greater than or equal to the lower limit value, a hollow fiber membrane of which favorable water permeability is secured can be formed.
In addition, in the case where the content of PVP in a membrane-forming stock solution is less than or equal to the upper limit value, a hollow fiber membrane having excellent peeling resistance can be formed.

(Total Amount of Content of PVDF and Content of PVP in Membrane-Forming Stock Solution)

The total amount of the content of PVDF and the content of PVP with respect to the total mass (100 mass%) of the membrane-forming stock solution is preferably greater than or equal to 37 mass%, more preferably greater than or equal to 38 mass%, and still more preferably greater than or equal to 39 mass%.
In the case where the total content of PVDF and PVP in the membrane-forming stock solution is greater than or equal to the lower limit values, it is possible to reduce the content of solvent in the membrane-forming stock solution. Therefore, there is a tendency for dynamic strength of a porous membrane layer of an obtained hollow fiber membrane to easily increase, and peeling between the porous membrane layer and a support is unlikely to occur.

(Difference Between Content of PVP and Content of PVDF in Membrane-Forming Stock Solution)

A value obtained by subtracting the content of PVDF in a membrane-forming stock solution from the content of PVP in the membrane-forming stock solution is preferably less than or equal to 5 mass%, more preferably less than or equal to 3 mass%, and still more preferably less than or equal to 1 mass%.
In the case where a value obtained by subtracting the content of PVDF from the content of PVP in a membrane-forming stock solution is less than or equal to the upper limit values, the content of PVP in the membrane-forming stock solution does not become excessive with respect to the content of PVDF. As a result, the density of a porous membrane layer of an obtained hollow fiber membrane increases, and peeling between the porous membrane layer and a support is unlikely to occur.

[Examples]

Hereinafter, the present invention will be described in more detail using examples, but is not limited to these examples.
In the examples, the unit "parts" indicates "parts by mass".

<BU Value (Inside)>

ABU value (inside) of a hollow fiber membrane was obtained through the following method. Figs. 3 and 4 may be referred to as necessary.

Method for Obtaining BU Value (Inside)

(1) A hollow fiber membrane 10 was cut in a direction perpendicular to a longitudinal direction to obtain a sample

having a length of about 5 mm.

(2) The sample obtained in (1) was cut in the longitudinal direction and divided into two equal pieces.

(3) Each sample obtained in (2) was further cut in the longitudinal direction and divided into two equal pieces to obtain four samples (Samples 1 to 4).

(4) Regarding the cut surface of the sample 1 obtained in (3) in the direction perpendicular to the longitudinal direction, a scanning electron image (at a magnification of 1,000 times and a number of pixels of 640 × 480) in which a range from an outer surface 13 of a porous membrane layer to the porous membrane layer side of a support 11 fitted in the visual field was taken.

(5) The image taken in (4) was subjected to the following (a) to (c) with image analysis software Image-Pro PLUS (manufactured by Media Cybernetics Inc.)

Any software in addition to the software may be used as the image analysis software as long as the following processing (a) to (c) can be performed.

(a) A photographic image was converted into an 8-bit grayscale (that is, a 256-gradation luminance scale) image.

(b) The converted image in (a) was subjected to processing of making a cumulative histogram of a luminance over the entire 256-gradation luminance scale into a linear shape.

(c) The processed image in (b) was repeatedly subjected to 5 × 5 median average processing three times.

(6) The processed image in (c) of (5) was subjected to the following (d) to (j).

(d) A middle point A of the outer circumference (portion appearing on the image) of the porous membrane layer 12 was obtained, and a tangent of the outer circumference from the middle point A was drawn.

(e) The perpendicular was drawn from the middle point A with respect to the tangent drawn in (d).

(f) A point at which the perpendicular drawn in (e) first reached the support 11 from the middle point A (for example, A1) was regarded as a point B (for example, B1). However, in a case where there was a gap 14 between the porous membrane layer 12 and the support 11 from the middle point A (for example, A2) to the point B, the edge of the gap 14 on the porous membrane layer 12 side on the perpendicular was regarded as the point B (for example, B2).

(g) Assuming that the length of a line segment AB was set as 100%, a point D positioned at 65% along a length from the point A on the line segment AB was obtained.

(h) A straight line which passed through the point D and was perpendicular to the line segment AB was drawn.

(i) A line segment which was on the straight line drawn in (h), had a middle point at the point D, and had a length of 85 μm was obtained. In a case where the line segment could not fit in the range of the image, the process returned to (4), an image was taken again while changing the visual field to be observed, and the subsequent operation was performed.

(j) A standard deviation of a luminance of all pixels constituting the line segment obtained in (i) was obtained and set as "BUD1".

(7) The samples 2 to 4 were subjected to (4) to (6) to obtain "BUD2" for the sample 2, "BUD3" for the sample 3, and "BUD4" for the sample 4.

(8) An arithmetic mean value BUDav of "BUD1", "BUD2", "BUD3", and "BUD4" was obtained.

(9) (1) to (8) were performed 20 times to obtain 20 BUDav's, and an arithmetic mean value of the 20 BUDav's was regarded as a BU value (inside).

<BU Value (Outside)>

ABU value (outside) of a hollow fiber membrane was obtained through the following method. Figs. 3 and 4 may be referred to as necessary.

Method for Obtaining BU Value (outside)

(1) to (5): The same operations as those of (1) to (5) of "Method for Obtaining BU Value (Inside)" were performed.

(6) The processed image in (c) of (5) was subjected to the following (d) to (j).

(d) A middle point A of the outer circumference (portion appearing on the image) of the porous membrane layer was obtained, and a tangent of the outer circumference from the middle point A was drawn.

(e) The perpendicular was drawn from the middle point A with respect to the tangent drawn in (d).
(f) A point at which the perpendicular drawn in (e) first reaches the support from the middle point A is regarded as a point B. However, in a case where there was a gap between the porous membrane layer and the support from the middle point A to the point B, the edge of the gap on the porous membrane layer side on the perpendicular was regarded as the point B.
(g) Assuming that the length of a line segment AB was set as 100%, a point C positioned at 5% along a length from the point A on the line segment AB was obtained.
(h) A straight line which passed through the point C and was perpendicular to the line segment AB was drawn.
(i) A line segment which was on the straight line drawn in (h), had a middle point at the point C, and had a length of 85 μm was obtained. In a case where the line segment could not fit in the range of the image, the process returned to (4), an image was taken again while changing the visual field to be observed, and the subsequent operation was performed.
(j) A standard deviation of a luminance of all pixels constituting the line segment obtained in (i) was obtained and set as "BUC1".

(7) The samples 2 to 4 were subjected to (4) to (6) to obtain "BUC2" for the sample 2, "BUC3" for the sample 3, and "BUC4" for the sample 4.
(8) An arithmetic mean value BUCav of "BUC1", "BUC2", "BUC3", and "BUC4" was obtained.
(9) (1) to (8) were performed 20 times to obtain 20 BUCav's, and an arithmetic mean value of the 20 BUCav's was regarded as a BU value (outside).

<R Value>

Method for Obtaining R Value

An R value was obtained from the following equation.

$$\text{R value} = \text{BU value (inside)} / \text{BU value (outside)}$$

<$^1$H-NMR>

$^1$H-NMR spectrums of a macromonomer and a copolymer were measured using an NMR device (manufactured by JEOL Ltd., JNM-EX270) under the following conditions.
DMAc-d9 to which tetramethylsilane was added was used as a deuterated solvent.
A structure of a macromonomer was analyzed with reference to a spectral database system (SDBS) of an organic compound which was provided by National Institute of Advanced Industrial Science and Technology, and the proportion of each unit constituting a copolymer was calculated.

<Mass Average Molecular Weight (Mw) of PVDF>

The mass average molecular weight (Mw) of PVDF was obtained using a GPC device (manufactured by TOSOH CORPORATION, HLC-8020) under the following conditions.

- Column: One obtained by connecting TSK GUARD COLUMN α (7.8 mm × 40 mm) and three TSK-GEL α-M columns (7.8 mm × 300 mm) to each other in series
- Eluent: DMF solution of lithium bromide (concentration of lithium bromide: 20 mM)
- Measurement temperature: 40°C
- Flow rate: 0.1 mL/minute
- Calibration curve: One created using polystyrene standard (8 kinds of Mp (peak top molecular weight) = 76,969,900, 2,110,000, 1,260,000, 775,000, 355,000, 186,000, 19,500, and 1,050) manufactured by TOSOH CORPORATION and styrene monomer (M (molecular weight) = 104) manufactured by NS Styrene Monomer Co., Ltd.

<Number Average Molecular Weight (Mn) and Mass Average Molecular Weight (Mw) of Macromonomer and Copolymer>

The number average molecular weight (Mn) and the mass average molecular weight (Mw) of a macromonomer and a copolymer were obtained using a GPC device (manufactured by TOSOH CORPORATION, HLC-8220) under the

following conditions.

- Column: One obtained by connecting TSK GUARD COLUMN SUPER H-L (4.6 mm × 35 mm) and two TSK-GEL SUPER HZM-H columns (4.6 mm × 150 mm) to each other in series
- Eluent: DMF solution of lithium chloride (concentration of lithium chloride: 0.01 M)
- Measurement temperature: 40°C
- Flow rate: 0.6 mL/minute
- Calibration curve: A calibration curve for macromonomer was created using polymethyl methacrylate (four kinds of Mp = 141,500, 55,600, 10,290, and 1,590) manufactured by Polymer Laboratories.

A calibration curve for a copolymer was created using polystyrene standard (12 kinds of Mp = 6,200,000, 2,800,000, 1,110,000, 707,000, 354,000, 189,000, 98,900, 37,200, 9,830, 5,870, 870, and 500) manufactured by TOSOH CORPORATION.

<Outer Diameter of Hollow Fiber Membrane>

The outer diameter of a hollow fiber membrane was measured through the following method.

Several samples which were to be measured and cut into about 10 cm were bundled, and the entirety of the bundle was covered with a polyurethane resin. The polyurethane resin was allowed to enter a hollow portion of a support as well. After the polyurethane resin is cured, a thin piece having a thickness of about 0.5 mm (in a longitudinal direction of the membrane) was sampled with a razor blade. The cross section of the sampled hollow fiber membrane was observed with a 100× objective lens using a projector (manufactured by Nikon Corporation, PROFILE PROJECTOR V-12). The outer diameter was read by aligning marks (lines) at positions of the outer surface of the cross section of the hollow fiber membrane in an X-direction and a Y-direction. This was measured three times to obtain an average value of the outer diameter.

<Membrane Thickness of Porous Membrane Layer>

The membrane thickness of a porous membrane layer was measured through the following method.

Sampling was performed through the same method as that of the sample of which the outer diameter was measured. The cross section of the sampled hollow fiber membrane was observed with a 100× objective lens using a projector (manufactured by Nikon Corporation, PROFILE PROJECTOR V-12). In the cross section of the hollow fiber membrane, the membrane thickness of the porous membrane layer was read by measuring the length from the outer surface of the hollow fiber membrane to the boundary between a support of the hollow fiber membrane and the porous membrane layer. This was measured three times to obtain an average value.

<Rejection of 40 nm Particles of Hollow Fiber Membrane>

The rejection of 40 nm particles of a hollow fiber membrane was measured and evaluated through the following method.

A sample of a hollow fiber membrane was cut into 9 pieces having a length of 15 cm, and one end surface of each piece was blocked with a urethane resin to seal a hollow portion. The 9 membranes were bundled, a module for measuring a rejection was produced by adjusting the bundle to have an effective membrane length of 10 cm and was immersed in a rinsing liquid obtained by diluting Triton X-100 of Wako Pure Chemical Industries, Ltd. with a 0.1 mass% solution as ultrapure water to be hydrophilized for 30 minutes. Next, a polystyrene standard particle solution (particle diameter of 0.040 μm, standard deviation of 0.004, 10 mass% solution) manufactured by Magsphere, Inc. was taken out and diluted with a rinsing liquid to 0.1 mass% to obtain a test solution.

The hydrophilized module was set on a test table, 10 ml of the test solution was poured on the outer surface side of the hollow fiber membranes, the test solution was subsequently filtered by applying air pressure of 70 kPa, and a filtrate coming out of one end surface of the module was collected. Subsequently, 10 ml of a rinsing liquid was poured in the same manner as the test solution, and then the operation of filtering a rinsing liquid by applying air pressure of 70 kPa was repeated 10 times, and a filtrate was collected each time.

Regarding 10 mL of each of the obtained 11 filtrates, the absorbances A1 to A11 at 320 nm were measured with a spectrophotometer (manufactured by SHIMADZU, UVmini-1240). In addition, the absorbance A0 of the test solution was also measured in the same manner. The rejection was calculated according to the following equation using the obtained absorbances.

$$\text{Rejection (\%)} = 1 - \{(A1 + A2 + \cdots A10 + A11) / A0\} \times 100$$

<Rejection of 48 nm Particles of Hollow Fiber Membrane>

The rejection of 48 nm particles of a hollow fiber membrane was measured and evaluated through the following method.

A sample of a hollow fiber membrane was cut into 9 pieces having a length of 15 cm, and one end surface of each piece was blocked with a urethane resin to seal a hollow portion. The 9 membranes were bundled, a module for measuring a rejection was produced by adjusting the bundle to have an effective membrane length of 10 cm and was immersed in a rinsing liquid obtained by diluting Triton X-100 of Wako Pure Chemical Industries, Ltd. with a 0.1 mass% solution as ultrapure water to be hydrophilized for 30 minutes. Next, a polystyrene standard particle solution (particle diameter of 0.048 μm, standard deviation of 0.011, 10 mass% solution) manufactured by Magsphere, Inc. was taken out and diluted with a rinsing liquid to 0.1 mass% to obtain a test solution.

The hydrophilized module was set on a test table, 10 ml of the test solution was poured on the outer surface side of the hollow fiber membranes, the test solution was subsequently filtered by pressurizing with air pressure of 70 kPa, and a filtrate coming out of one end surface of the module was collected. Subsequently, 10 ml of a rinsing liquid was poured in the same manner as the test solution, and then the operation of filtering a rinsing liquid by applying air pressure of 70 kPa was repeated 10 times, and a filtrate was collected each time.

Regarding 10 mL of each of the obtained 11 filtrates, the absorbances A1 to A11 at 320 nm were measured with a spectrophotometer (manufactured by SHIMADZU, UVmini-1240). In addition, the absorbance A0 of the test solution was also measured in the same manner. The rejection was calculated according to the following equation using the obtained absorbances.

$$\text{Rejection (\%)} = 1 - \{(A1 + A2 + \cdots A10 + A11) / A0\} \times 100$$

<Water permeability of Hollow Fiber Membrane>

The water permeability of a hollow fiber membrane was measured and evaluated through the following method.

First, a sample of a hollow fiber membrane to be measured was cut into a length of 4 cm, and one end surface was blocked with a polyurethane resin to seal a hollow portion.

Next, the above-described sample was immersed in ethanol, and then the inside of the membrane was deaerated by depressurizing the inside of a container in which ethanol was accommodated for 5 minutes or longer to replace the inside of the membrane with ethanol. Thereafter, the sample was immersed in pure water for 5 minutes or longer to replace ethanol with the pure water, and was then taken out.

Then, pure water (at 25°C) was placed in a container, the other end surface of the sample was connected to the container by a tube, and air pressure of 100 kPa was applied to the container to measure the amount of pure water coming out of the sample for 1 minute. This was measured three times to obtain an average value thereof. Then, this numerical value was divided by the surface area of the sample to obtain a water permeability.

<Peeling Resistance Performance of Hollow Fiber Membrane>

The peeling resistance performance of a hollow fiber membrane was measured and evaluated through the following method.

First, a sample of a hollow fiber membrane to be measured was immersed in a 0.3 mass% solution of a surfactant (manufactured by Nisshin Chemical Industry Co., Ltd., trade name of OLFINE EXP. 4036 (registered trademark)) for 10 minutes and was then immersed in pure water to replace the inside of the membrane with the pure water.

Next, 8 samples were arranged in parallel on a polyvinyl chloride plate, and both ends were taped to have an effective length of 10 cm.

Next, high-pressure water at a maximum water volume (catalog value: discharge pressure of 8.0 MPa, discharge water volume of 330 (L/h)) was continuously sprayed vertically on center portions of the samples for 30 seconds using a high-pressure washing machine (manufactured by Karcher, high-pressure washing machine, Karcher K2 Classic Plus). At this time, the distance between a distal end of a nozzle and the samples was adjusted to be 10 cm, and high-pressure water was sprayed on all the 8 samples.

The spaying of the high-pressure water was stopped, and the samples were dried to observe whether peeling was found in the samples using a stereo microscope. Such a test was performed three times (a total of 24 samples),

and the number of samples of which surfaces were scraped and the number of samples in which peeling was found were counted.

<Content of PVP in Hollow Fiber Membrane>

The content of PVP in a hollow fiber membrane was measured through the following method.
Measurement was performed at three points per sample of a membrane, which had been dried at 60°C for 3 hours, through an ATR method (number of integration times: 256) using 600 UMA type FT-IR Microscope manufactured by Varian Inc., and the content of PVP contained in the hollow fiber membrane was calculated from a ratio of a peak top height at 1,400 $cm^{-1}$ to a peak top height at 1,675 $cm^{-1}$ of an obtained spectrum.

<Burst Pressure of Hollow Fiber Membrane>

The burst pressure of a hollow fiber membrane was measured and evaluated through the following method.
A hollow fiber porous membrane sample to be measured was cut into 4 cm, and one end surface was blocked with a polyurethane resin to seal a hollow portion. Next, the sample was immersed in ethanol in a container, and then the inside of the membrane was deaerated by depressurizing the inside of the container for 5 minutes or longer to replace the inside of the membrane with ethanol. Thereafter, the sample was immersed in pure water for 5 minutes or longer to replace ethanol with the pure water, and was then taken out. The sample was immersed in pure water (at 25°C) in a container, the other end surface of the sample was connected to the container by a tube, and air pressure was slowly applied to the hollow portion of the sample through the tube. The pressure was gradually increased, and the pressure at which the membrane burst was recorded and regarded as a burst pressure. Even in a case where air bubbles were checked on the outer surface of the sample, the pressure was continuing increased, and the pressure at which the membrane completely burst was regarded as a burst pressure. This was measured three times to obtain an average value.

Production Example 1 (Synthesis of Cobalt Chain Transfer Agent)

1.00 g of cobalt (II) acetate tetrahydrate (manufactured by Wako Pure Chemical Industries, Ltd., Wako's special grade), 1.93 g of diphenylglyoxime (manufactured by Tokyo Chemical Industry Co., Ltd., EP grade), and 80 mL of diethyl ether (manufactured by KANTO KAGAKU, special grade) which was replaced with nitrogen for 30 minutes or longer and deoxidation was performed were placed in a reactor equipped with a stirrer in a nitrogen atmosphere, and were stirred at room temperature for 30 minutes to obtain a mixture. 10 mL of a boron trifluoride-diethyl ether complex (manufactured by Tokyo Chemical Industry Co., Ltd., EP grade) was added to the mixture, and stirred for 6 hours to obtain a reactant. The reactant was filtered, and a solid was cleaned with diethyl ether (manufactured by KANTO KAGAKU, special grade) and vacuum-dried for 15 hours to obtain 2.12 g of a cobalt chain transfer agent CoBF-1 which is a reddish brown solid.

Production Example 2 (Synthesis of Dispersant)

61.6 Parts of a 17% potassium hydroxide aqueous solution, 19.1 parts of methyl methacrylate (manufactured by Mitsubishi Chemical Corporation, Acryester (registered trademark) M), and 19.3 parts of deionized water were put into a reactor equipped with a stirrer, a cooling pipe, and a thermometer. The solution in the reactor was stirred at room temperature and was further stirred for 4 hours after an exothermic peak was confirmed to obtain a reaction solution. Thereafter, the reaction solution was cooled to room temperature to obtain a potassium methacrylate aqueous solution.
900 Parts of deionized water, 70 parts of a 42% 2-sulfoethyl sodium methacrylate aqueous solution (manufactured by Mitsubishi Chemical Corporation, Acryester (registered trademark) SEM-Na), 16 parts of the potassium methacrylate aqueous solution, and 7 parts of methyl methacrylate (manufactured by Mitsubishi Chemical Corporation, Acryester (registered trademark) M) were placed in a polymerization device equipped with a stirrer, a cooling pipe, and a thermometer and stirred, and the temperature was raised to 50°C while replacing the inside of the polymerization device with nitrogen. 0.053 Parts of 2,2'-azobis (2-methylpropionamidine) dihydrochloride (manufactured by Wako Pure Chemical Industries, Ltd., V-50) was added thereto as a polymerization initiator, and the temperature was raised to 60°C. After the addition of the polymerization initiator, 1.4 parts of methyl methacrylate (manufactured by Mitsubishi Chemical Corporation, Acryester (registered trademark) M) was dividedly added thereto in total 5 times every 15 minutes. Thereafter, the solution in the polymerization device was held at 60°C for 6 hours while stirring the solution, and was then cooled to room temperature to obtain a dispersant 1 which is a transparent aqueous solution and has a solid content of 8%.

Production Example 3 (Synthesis of Macromonomer)

100 Parts of methyl methacrylate (manufactured by Mitsubishi Chemical Corporation, Acryester (registered trademark) M), 150 parts of deionized water, 1.39 parts of sodium sulfate, 1.53 parts of the dispersant 1, and 0.00045 parts of CoBF-1 were put into a cooling pipe-attached flask. CoBF-1 was dissolved in the solution in the flask in a state in which the solution was heated to 70°C, and the inside of the flask was replaced with nitrogen through nitrogen bubbling. 0.12 Parts of 1,1,3,3-tetramethylbutyl peroxy-2-ethylhexanoate (manufactured by NOF CORPORATION, Perocta (registered trademark) O) was added thereto as a polymerization initiator, the mixture was held for 6 hours in a state in which the internal temperature was maintained at 70°C, and the polymerization was completed to obtain a polymerization reactant. Thereafter, the polymerization reactant was cooled to room temperature and filtered to recover a polymer. The obtained polymer was washed with water and was then vacuum-dried at 50°C overnight to obtain a macromonomer. Mn of the macromonomer was 40,000, and Mw/Mn was 2.3. The introduction rate of a terminal double bond of the macromonomer was approximately 100%. The macromonomer was a compound in which R in Formula (1) was a methyl group.

Production Example 4 (Synthesis of Copolymer)

A monomer composition consisting of 51 parts of 2-methoxyethyl acrylate (MEA) (manufactured by Wako Pure Chemical Industries, Ltd., Wako's first grade), 9 parts of 2-hydroxyethyl methacrylate (HEMA) (manufactured by Mitsubishi Chemical Corporation, Acryester (registered trademark) HO), 40 parts of a macromonomer, and 150 parts of DMAc (manufactured by Wako Pure Chemical Industries, Ltd., reagent special grade) described in Table 1 was put into a cooling pipe-attached flask, and the inside of the cooling pipe-attached flask was replaced with nitrogen through nitrogen bubbling. 0.1 Parts of 2,2'-azobis (2,4'-dimethylvaleronitrile) (manufactured by Wako Pure Chemical Industries, Ltd., trade name: V-65) was added to the monomer composition in a state in which the monomer composition was heated and the temperature was kept at 55°C, and then, the mixture was held for 5 hours. The temperature was raised to 70°C, and 0.15 parts of V-65 was added to the monomer composition. Thereafter, the mixture was held for 60 minutes and polymerized. The temperature was cooled to room temperature, and a polymerization solution containing 40% of a copolymer was obtained. Mn and Mw/Mn of the copolymer are shown in Table 1. In addition, the proportion of each unit constituting the copolymer is shown in Table 1.

[Table 1]

| | | | |
|---|---|---|---|
| Measurement result of copolymer | Proportion (mass%) of each unit | MEA unit | 50.3 |
| | | HEMA unit | 9.1 |
| | | Macromonomer unit | 40.6 |
| | Molecular weight Molecular weight distribution | Mn | 88,000 |
| | | Mw | 280,000 |
| | | Mw/Mn | 3.2 |

Preparation of Membrane-Forming Stock Solution (1)

PVDF (manufactured by Arkema Inc., Kynar 761A, Mw=5.5 $\times$ $10^5$), a copolymer-containing polymerization solution, polyvinyl pyrrolidone (manufactured by NIPPON SHOKUBAI CO., LTD., PVPK-30, K value = 30), and DMAc (manufactured by Wako Pure Chemical Industries, Ltd., Wako's special grade) were placed in a stainless steel container in amounts shown in Table 2, and a membrane-forming stock solution was prepared while stirring the mixture at 60°C for 5 hours. The obtained membrane-forming stock solution was allowed to stand at 25°C for one day.

Preparation of Membrane-Forming Stock Solution (2)

A membrane-forming stock solution (2) was prepared in the same manner as the membrane-forming stock solution (1) except that the charged amounts were changed to those shown in Table 2.

Preparation of Membrane-Forming Stock Solution (3)

A membrane-forming stock solution (3) was prepared in the same manner as the membrane-forming stock

solution (1) except that the raw materials and the charged amounts of the membrane-forming stock solution were changed as shown in Table 2. PVP K-79 in Table 2 is PVP of which a K value is 79.

Preparation of Membrane-Forming Stock Solutions (4) to (6)

Membrane-forming stock solutions (4) to (6) were prepared in the same manner as the membrane-forming stock solution (1) except that the charged amounts were changed to those shown in Table 2.

Preparation of Membrane-Forming Stock Solutions (7) and (8)

A membrane-forming stock solutions (7) and (8) were prepared in the same manner as the membrane-forming stock solution (1) except that the raw materials and the charged amounts of the membrane-forming stock solution were changed as shown in Table 2. PVP K-79 in Table 2 is PVP of which a K value is 79.

Preparation of Membrane-Forming Stock Solutions (9) to (11)

Membrane-forming stock solutions (9) to (11) were prepared in the same manner as the membrane-forming stock solution (1) except that the charged amounts were changed to those shown in Table 2.

[Table 2]

| | | Membrane-forming stock solution | | | | | | | | | | |
|---|---|---|---|---|---|---|---|---|---|---|---|---|
| | | (1) | (2) | (3) | (4) | (5) | (6) | (7) | (8) | (9) | (10) | (11) |
| Charged amount (parts) of raw material of membrane-forming stock solution | PVDF | 20.8 | 20.0 | 18.0 | 18.8 | 19.8 | 19.4 | 19.4 | 20.2 | 17.8 | 17 | 19.4 |
| | Copolymer-containing polymerization solution | 3.0 | 3.0 | 0 | 6.0 | 5.9 | 5.8 | 0 | 0 | 5.4 | 0 | 3.1 |
| | PVP K-79 | 0 | 0 | 4.0 | 0 | 0 | 0 | 10.2 | 11.0 | 0 | 0 | 0 |
| | PVP K-30 | 16.7 | 20.0 | 12.0 | 16.0 | 19.8 | 19.4 | 0 | 0 | 17.8 | 23 | 19.4 |
| | DMAc | 59.4 | 57.0 | 67.0 | 60.2 | 54.7 | 55.3 | 70.5 | 69.2 | 59.0 | 60 | 58.2 |

Example A-1

A multifilament of a polyester fiber (made of polyethylene terephthalate, fineness of 417 dtex) was circularly knitted, and a heat treatment under a tension was performed at 210°C to obtain a support. The outer diameter of the support was 1.45 mm.
A hollow fiber membrane was prepared using a production device 1 shown in Fig. 1. The membrane-forming stock solutions (1) and (2) were sent from stock solution supply devices 2 of the production device 1 to a double-tube nozzle 3 of which the temperature was adjusted to 32°C, the outer circumferential surface of a support 4 was coated with the membrane-forming stock solution (2) and the outer circumferential surface of the membrane-forming stock solution (2) was coated with the membrane-forming stock solution (1) at the same time in the double-tube nozzle 3.
The support 4 coated with the membrane-forming stock solutions was subjected to motion in air, and the membrane-forming stock solutions were coagulated by immersing the support in a coagulation solution (20 mass% aqueous solution of DMAc) in a coagulation bath 5 at 60°C to obtain a hollow fiber membrane precursor 6 having two porous membrane precursor layers.
A step of immersing the hollow fiber membrane precursor in hot water at 60°C and a step of immersing the hollow fiber membrane precursor in a sodium hypochlorite aqueous solution were repeated, and the hollow fiber membrane precursor was finally dried in a drying furnace heated to 115°C for 3 minutes to obtain a hollow fiber membrane having two porous membrane layers (inner layer and outer layer).
The results are shown in Table 3.
The content of remaining PVP was 1.2%. In addition, the burst pressure of the hollow fiber membrane was 250 kPa.

Example A-2

A hollow fiber membrane was obtained in the same manner as in Example A-1 except that the type of membrane-forming stock solution for an outer layer and the temperature of the coagulation solution were changed as shown in Table 3.
The results are shown in Table 3.
The content of remaining PVP was 1.3%. In addition, the burst pressure of the hollow fiber membrane was 361 kPa.

Example A-3

A hollow fiber membrane was obtained in the same manner as in Example A-1 except that the type of membrane-forming stock solution for an inner layer was changed as shown in Table 3.
The results are shown in Table 3.
The content of remaining PVP was 4.2%. In addition, the burst pressure of the hollow fiber membrane was 357 kPa.

Comparative Example A-1

A hollow fiber membrane was obtained in the same manner as in Example A-1 except that the type of membrane-forming stock solution for an outer layer, the type of membrane-forming stock solution for an inner layer, the ratio (volume ratio) of a membrane-forming stock solution for an outer layer to a membrane-forming stock solution for an inner layer, and the temperature of the coagulation solution were changed as shown in Table 3.
The results are shown in Table 3.
The content of remaining PVP was 3.0%. In addition, the burst pressure of the hollow fiber membrane was 231 kPa.

[Table 3]

| | Examples | | | Comparative Example |
|---|---|---|---|---|
| | A-1 | A-2 | A-3 | A-1 |
| Type of membrane-forming stock solution for outer layer | (1) | (4) | (1) | (7) |

(continued)

| | | | Examples | | | Comparative Example |
|---|---|---|---|---|---|---|
| | | | A-1 | A-2 | A-3 | A-1 |
| Charged amount (parts) of raw material of membrane-forming stock solution | PVDF | | 20.8 | 18.8 | 20.8 | 19.4 |
| | Copolymer-containing polymerization solution | | 3.0 | 6.0 | 3.0 | 0 |
| | PVP K-79 | | 0 | 0 | 0 | 10.2 |
| | PVP K-30 | | 16.7 | 16.0 | 16.7 | 0 |
| | DMAc | | 59.4 | 60.2 | 59.4 | 70.5 |
| Type of membrane-forming stock solution for inner layer | | | (2) | (2) | (11) | (8) |
| Charged amount (parts) of raw material of membrane-forming stock solution | PVDF | | 20.0 | 20.0 | 19.4 | 20.2 |
| | Copolymer-containing polymerization solution | | 3.0 | 3.0 | 3.1 | 0 |
| | PVP K-79 | | 0 | 0 | 0 | 11.0 |
| | PVP K-30 | | 20.0 | 20.0 | 19.4 | 0 |
| | DMAc | | 57.0 | 57.0 | 58.2 | 69.2 |
| Ratio (volume ratio) of membrane-forming stock solution for outer layer to membrane-forming stock solution for inner layer | | | 6/10 | 6/10 | 6/10 | 7.1/8.9 |
| Temperature (°C) of coagulation solution | | | 60 | 70 | 60 | 75 |
| Evaluation result of hollow fiber membrane | Outer diameter (μm) | | 1653 | 1619 | 1639 | 1663 |
| | Membrane thickness (μm) of porous membrane layer | | 106 | 99 | 112 | 109 |
| | Rejection (%) of 40 nm particles | | 93 | 86 | 97 | 0 |
| | Rejection (%) of 48 nm particles | | 99 | 96 | 98 | 77 |
| | BU value (inside) | | 30.9 | 33.6 | 30.2 | 37.2 |
| | BU value (outside) | | 17.4 | 17.1 | 16.6 | 19.2 |
| | R value | | 1.78 | 1.97 | 1.82 | 1.94 |
| | Peeling resistance performance | Number (pieces) of samples of which surface was scraped | 0 | 1 | 0 | 0 |
| | | Number (pieces) of samples peeled | 0 | 0 | 0 | 24 |
| | Water permeability WF ($m^3/m^2/MPa/h$) | | 5.8 | 13.7 | 7.6 | 32.1 |

Example B-1

A multifilament of a polyester fiber (made of polyethylene terephthalate, fineness of 417 dtex) was circularly knitted, and a heat treatment under a tension was performed at 210°C to obtain a support. The outer diameter of the support was 1.45 mm.

A hollow fiber membrane was prepared using a production device 1 shown in Fig. 2. The membrane-forming stock solution (5) was sent from a stock solution supply device 2 of a production device 1 to a double-tube nozzle 3 of which the temperature was adjusted to 32°C, the outer circumferential surface of a support 4 was coated with the membrane-forming stock solution (5) in the double-tube nozzle 3.

The support 4 coated with the membrane-forming stock solutions was subjected to motion in air, and the membrane-forming stock solutions were coagulated by immersing the support in a coagulation solution (20 mass%

aqueous solution of DMAc) in a coagulation bath 5 at 65°C to obtain a hollow fiber membrane precursor 6 having a single porous membrane precursor layer.

A step of immersing the hollow fiber membrane precursor in hot water at 60°C and a step of immersing the hollow fiber membrane precursor in a sodium hypochlorite aqueous solution were repeated, and the hollow fiber membrane precursor was finally dried in a drying furnace heated to 115°C for 3 minutes to obtain a hollow fiber membrane having a single porous membrane layer.

The results are shown in Table 4.

The content of remaining PVP was 2.9%. In addition, the burst pressure of the hollow fiber membrane was 313 kPa.

Example B-2

A hollow fiber membrane was obtained in the same manner as in Example B-1 except that the temperature of the coagulation solution was changed as shown in Table 4.

The results are shown in Table 4.

The content of remaining PVP was 1.6%. In addition, the burst pressure of the hollow fiber membrane was 324 kPa.

Example B-3

A hollow fiber membrane was obtained in the same manner as in Example B-1 except that the type of membrane-forming stock solution was changed as shown in Table 4.

The results are shown in Table 4.

The content of remaining PVP was 1.9%. In addition, the burst pressure of the hollow fiber membrane was 320 kPa.

Example B-4

A hollow fiber membrane was obtained in the same manner as in Example B-1 except that the type of membrane-forming stock solution and the temperature of the coagulation solution were changed as shown in Table 4.

The results are shown in Table 4.

The content of remaining PVP was 2.2%. In addition, the burst pressure of the hollow fiber membrane was 333 kPa.

Comparative Example B-1

A hollow fiber membrane was obtained in the same manner as in Example B-2 except that the type of membrane-forming stock solution was changed as shown in Table 4.

The results are shown in Table 4.

The content of remaining PVP was 1.3%. In addition, the burst pressure of the hollow fiber membrane was 319 kPa.

Comparative Example B-2

Various measurements were performed on a commercially available hollow fiber membrane (manufactured by Suez Water Technology & Solutions, trade name: ZeeWeed 500d).

The results are shown in Table 4.

The content of remaining PVP could not be calculated because other components contained in the membrane could not be clearly determined. The burst pressure of the hollow fiber membrane was 376 kPa.

Comparative Example B-3

A hollow fiber membrane was obtained in the same manner as in Example B-2 except that the type of membrane-forming stock solution was changed as shown in Table 4.

The results are shown in Table 4.

The content of remaining PVP was 1.9%. In addition, the burst pressure of the hollow fiber membrane was 260 kPa.

Comparative Example B-4

A hollow fiber membrane was obtained in the same manner as in Comparative Example B-3 except that the temperature of coagulation solution was changed as shown in Table 4.
The results are shown in Table 4.
The content of remaining PVP was 3.6%. In addition, the burst pressure of the hollow fiber membrane was 250 kPa.

Comparative Example B-5

A hollow fiber membrane was obtained in the same manner as in Example B-1 except that the type of membrane-forming stock solution and the temperature of the coagulation solution were changed as shown in Table 4.
The results are shown in Table 4.
The content of remaining PVP was 1.9%. In addition, the burst pressure of the hollow fiber membrane was 328 kPa.

[Table 4]

| | | | Examples | | | | Comparative Examples | | | | |
|---|---|---|---|---|---|---|---|---|---|---|---|
| | | | B-1 | B-2 | B-3 | B-4 | B-1 | B-2 | B-3 | B-4 | B-5 |
| Type of membrane-forming stock solution | | | (5) | (5) | (6) | (1) | (9) | - | (10) | (10) | (3) |
| Charged amount (parts) of raw material of membrane-forming stock solution | PVDF | | 19.8 | 19.8 | 19.4 | 20.8 | 17.8 | - | 17 | 17 | 18.0 |
| | Copolymer-containing polymerization solution | | 5.9 | 5.9 | 5.8 | 3.0 | 5.4 | - | 0 | 0 | 0 |
| | PVP K-79 | | 0 | 0 | 0 | 0 | 0 | - | 0 | 0 | 4.0 |
| | PVPK-30 | | 19.8 | 19.8 | 19.4 | 16.7 | 17.8 | - | 23 | 23 | 12.0 |
| | DMAc | | 54.7 | 54.7 | 55.3 | 59.4 | 59.0 | - | 60 | 60 | 67.0 |
| Temperature (°C) of coagulation solution | | | 65 | 70 | 65 | 60 | 70 | - | 70 | 65 | 73 |
| Evaluation result of hollow fiber membrane | Outer diameter (μm) | | 1667 | 1678 | 1662 | 1707 | 1656 | 1864 | 1635 | 1603 | 1600 |
| | Membrane thickness (μm) of porous membrane layer | | 111 | 111 | 119 | 126 | 113 | 104 | 109 | 112 | 130 |
| | Rejection (%) of 40 nm particles | | 99 | 98 | 88 | 95 | 64 | 100 | 70 | 98 | 4 |
| | Rejection (%) of 48 nm particles | | 100 | 100 | 96 | 91 | 90 | 100 | 81 | 93 | 6 |
| | BU value (inside) | | 27.6 | 25.7 | 30.3 | 21.6 | 38.3 | 21.4 | 33.0 | 32.8 | 38.4 |
| | BU value (outside) | | 16.3 | 14.4 | 15.7 | 16.4 | 17.6 | 20.6 | 15.1 | 14.9 | 16.0 |
| | R value | | 1.69 | 1.79 | 1.93 | 1.32 | 2.18 | 1.04 | 2.20 | 2.20 | 2.40 |
| | Peeling resistance performance | Number (pieces) of samples of which surface was scraped | 0 | 0 | 1 | 0 | 6 | 5 | 0 | 0 | 0 |
| | | Number (pieces) of samples peeled | 0 | 0 | 0 | 0 | 2 | 0 | 24 | 24 | 3 |
| | Water permeability WF ($m^3/m^2/MPa/h$) | | 8.6 | 21.3 | 12.2 | 2.7 | 29.6 | 3.6 | 26.8 | 15.0 | 28.0 |

[Reference Signs List]

| | |
|---|---|
| 1 | production device |
| 10 | hollow fiber membrane |
| 11 | support |
| 12 | porous membrane layer |
| 13 | outer surface of porous membrane layer |
| 14 | gap |
| 2 | stock solution supply device |
| 3 | double-tube nozzle |
| 4 | support |
| 5 | coagulation bath |
| 6 | hollow fiber membrane precursor |

## Claims

**1.** A hollow fiber membrane comprising:

a support; and
a porous membrane layer disposed on an outer circumferential surface of the support,
wherein a BU value (inside) is less than or equal to 36 and a R value is 1.1 to 2.1,
wherein the BU value (inside) is a value obtained from a standard deviation of a luminance of all pixels constituting a specific line segment at a position (closer to the support) at 65% of a thickness of the porous membrane layer in which a cross-sectional image of the hollow fiber membrane subjected to image processing is used,
wherein the R value is a value obtained by dividing the BU value (inside) by a BU value (outside), and
wherein the BU value (outside) is a value obtained from a standard deviation of a luminance of all pixels constituting a specific line segment at a position (closer to an outer surface) at 5% of a thickness of the porous membrane layer in which a cross-sectional image of the hollow fiber membrane subjected to image processing is used.

**2.** The hollow fiber membrane according to claim 1,
wherein the BU value (outside) is less than or equal to 19.

**3.** The hollow fiber membrane according to claim 1 or 2,
wherein the BU value (inside) is greater than or equal to 16.

**4.** The hollow fiber membrane according to any one of claims 1 to 3,
wherein the BU value (outside) is greater than or equal to 6.

**5.** The hollow fiber membrane according to any one of claims 1 to 4,
wherein the R value is less than or equal to 1.9.

**6.** The hollow fiber membrane according to any one of claims 1 to 5,
wherein the R value is greater than or equal to 1.5.

**7.** The hollow fiber membrane according to any one of claims 1 to 6,
wherein the BU value (inside) is greater than or equal to 23.

**8.** The hollow fiber membrane according to any one of claims 1 to 7,
wherein the BU value (outside) is greater than or equal to 10.

**9.** The hollow fiber membrane according to any one of claims 1 to 8,
wherein the BU value (outside) is greater than or equal to 13.

**10.** The hollow fiber membrane according to any one of claims 1 to 9,

wherein a result of a peeling resistance performance test is 1 piece or less.

**11.** The hollow fiber membrane according to any one of claims 1 to 10, wherein a water permeability is greater than or equal to 5 $m^3/m^2/MPa/h$.

**12.** The hollow fiber membrane according to any one of claims 1 to 11, wherein a rejection (%) of 48 nm particles is higher than or equal to 90%.

**13.** The hollow fiber membrane according to any one of claims 1 to 12, wherein a rejection (%) of 40 nm particles is higher than or equal to 80%.

**14.** The hollow fiber membrane according to any one of claims 1 to 12, wherein a rejection (%) of 40 nm particles is higher than or equal to 90%.

**15.** The hollow fiber membrane according to any one of claims 1 to 14, wherein the support is a knitted.

FIG. 1

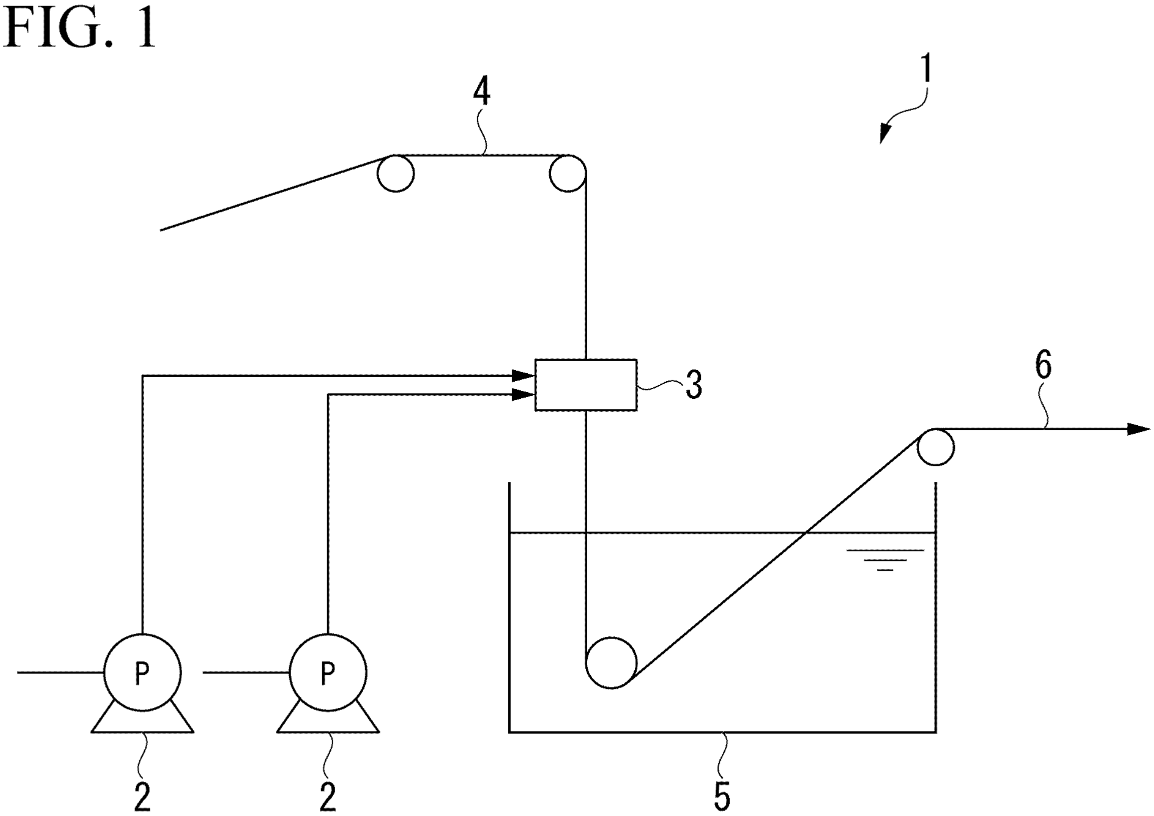


FIG. 2

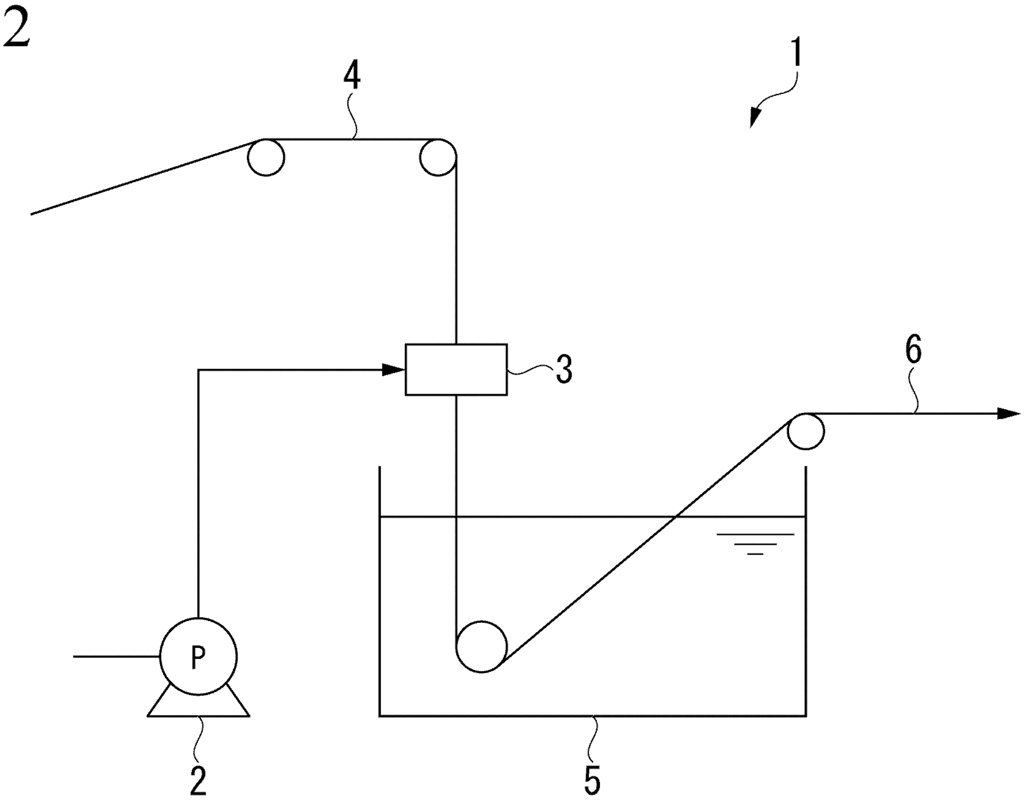

FIG. 3

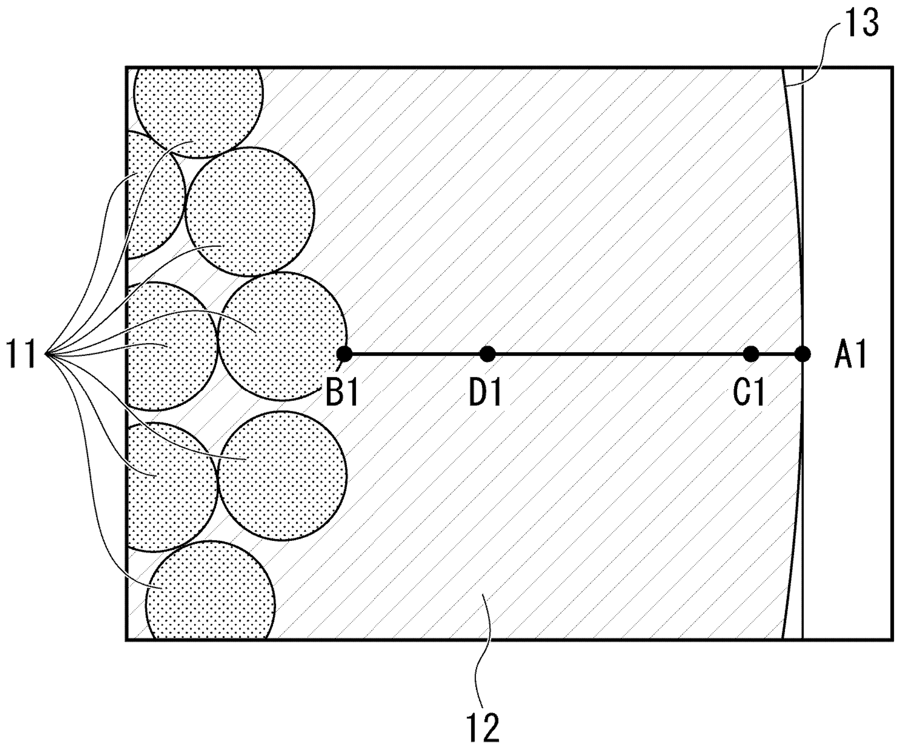


FIG. 4

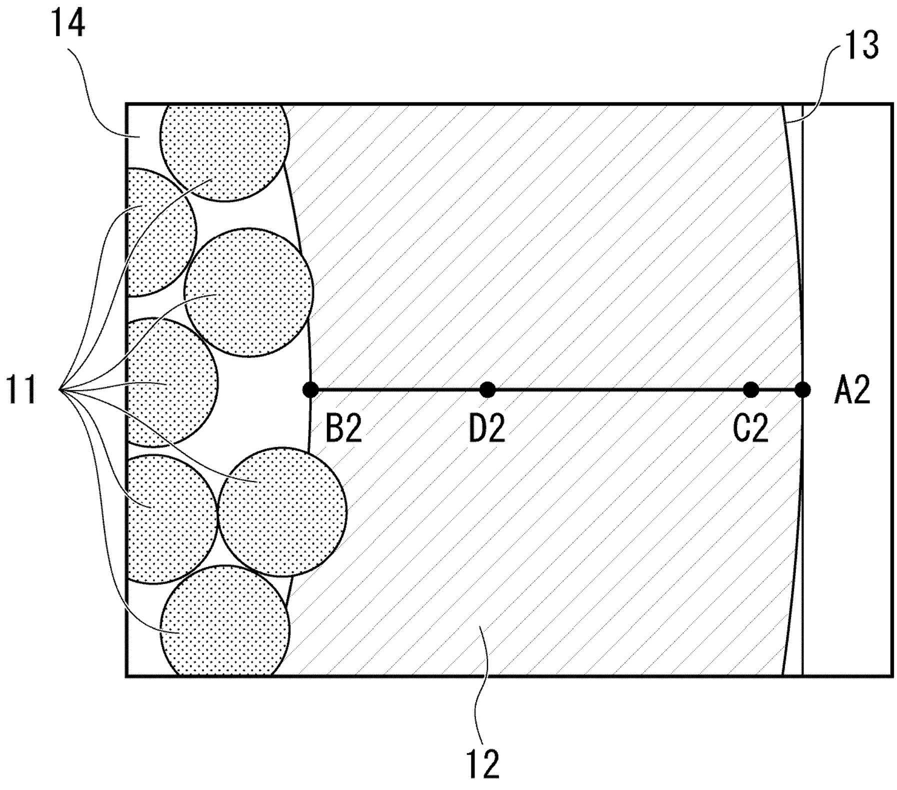

## INTERNATIONAL SEARCH REPORT

International application No. PCT/JP2018/035363

A. CLASSIFICATION OF SUBJECT MATTER
Int.Cl. B01D69/08(2006.01)i, B01D69/10(2006.01)i, B01D69/12(2006.01)i, B01D71/34(2006.01)i, B01D71/40(2006.01)i

According to International Patent Classification (IPC) or to both national classification and IPC

B. FIELDS SEARCHED

Minimum documentation searched (classification system followed by classification symbols)
Int.Cl. B01D53/22, B01D61/00-71/82, C02F1/44, D01F6/12, D01F6/48

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | WO 2015/146469 A1 (KURARAY CO., LTD.) 01 October 2015, paragraphs [0013]-[0014], [0039]-[0041], [0097], [0144]-[0151], [0175]-[0178], claims, fig. 4, 5, 6 & EP 3103546 A1, paragraphs [0013]-[0014], [0039]-[0041], [0095], [0142]-[0149], [0173]-[0176], claims, fig. 4, 5, 6 & US 2018/0169590 A1 & CN 106132521 A & KR 10-2016-0136430 A | 1-14<br>1-15 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
21 November 2018 (21.11.2018)

Date of mailing of the international search report
04 December 2018 (04.12.2018)

Name and mailing address of the ISA/
Japan Patent Office
3-4-3, Kasumigaseki, Chiyoda-ku,
Tokyo 100-8915, Japan

Authorized officer

Telephone No.

Form PCT/ISA/210 (second sheet) (January 2015)

INTERNATIONAL SEARCH REPORT

International application No.
PCT/JP2018/035363

C (Continuation). DOCUMENTS CONSIDERED TO BE RELEVANT

| Category* | Citation of document, with indication, where appropriate, of the relevant passages | Relevant to claim No. |
|---|---|---|
| P, X<br>P, Y | JP 2017-213515 A (KURARAY CO., LTD.) 07 December 2017, claims, paragraphs [0093], [0115]-[0143], fig. 9 (Family: none) | 1-14<br>1-15 |
| Y | JP 2014-079687 A (ASAHI KASEI CHEMICALS CORP.) 08 May 2014, claims, paragraphs [0021]-[0023] (Family: none) | 1-15 |
| Y | JP 2017-056387 A (MITSUBISHI RAYON CO., LTD.) 23 March 2017, claim 7 (Family: none) | 15 |
| Y | JP 2016-097362 A (ASAHI KASEI CHEMICALS CORP.) 30 May 2016, claim 3 (Family: none) | 15 |
| Y | JP 2013-063383 A (MITSUBISHI RAYON CO., LTD.) 11 April 2013, claim 1 (Family: none) | 15 |
| A | US 2015/0096934 A1 (TIANJIN POLYTECHNIC UNIVERSITY) 09 April 2015, paragraphs [0027]-[0048] & WO 2013/143345 A1 & CN 102600733 A | 1-15 |

Form PCT/ISA/210 (continuation of second sheet) (January 2015)

**INTERNATIONAL SEARCH REPORT**

International application No. PCT/JP2018/035363

<Regarding the subject of the examination>

Claim 1 of the present application includes the following statement.

"a hollow fiber membrane comprising a support body and a porous membrane layer disposed on the outer peripheral surface of the support body, the hollow fiber membrane having a BU value (inner) of 36 or less and an R value of 1.1 to 2.1, where

the BU value (inner) is a value obtained, using an image-processed cross-section photograph of the hollow fiber membrane, from the standard deviation of the brightness of every pixel constituting a specific line segment at a position corresponding to 65% of the thickness of the porous membrane layer (a position closer to the support body),

the R value is a value obtained by dividing the BU value (inner) by a BU value (outer), and

the BU value (outer) is a value obtained, using the image-processed cross-section photograph of the hollow fiber membrane, from the standard deviation of the brightness of every pixel constituting a specific line segment at a position corresponding to 5% of the thickness of the porous membrane layer (a position closer to the outer surface)".

Here, although the specific method for calculating "the BU value (inner)" or "the BU value (outer)" is unclear on the basis of only the statement of claim 1, referring to an explanation in the present application, the method for calculating "the BU value (inner)" or "the BU value (outer)" is described in paragraphs [0122]-[0123].

However, although the explanation includes the text of "regarding a cut section in a direction perpendicular to the longitudinal direction of a sample, a scanning electron micrograph (magnification: 1000x, resolution: 640×480) is captured to include the area from the outer surface of the porous membrane layer to the porous membrane layer-side of the support body", there is no indication about how to set an output or the like when capturing the scanning electron micrograph. Furthermore, if the output when capturing the scanning electron micrograph is not specified, how brightly the photograph was captured by the electron microscope cannot be specified.
(Considering the extreme cases, it is obvious to a person skilled in the art that a mostly white photograph is obtained if the output is strong and a mostly black photograph is obtained if the output is weak. However, merely stating that a sharp photograph is captured does not clearly specify the settings pertaining to the specific output that should be used to capture an image.)

In addition, it is obvious that the luminance of the photographed image obtained by the electron microscope and a parameter based on the luminance are greatly affected by how bright the captured photograph is overall.

Accordingly, it is technically unclear what configuration or state is specified by the value of the BU value (inner) or BU value (outer) obtained on the basis of the luminance of the photographed image with which the brightness of the overall captured photograph cannot be specified, and it is impossible to define one single feature that is the configuration or state specified by the specific value.

Therefore, the configuration that the BU value (inner), the BU value (outer), and the R value described in claim 1 of the present application, and the BU value (inner), the BU value (outer), and the R value described in claims 2-9 are intended to define cannot be specified, and thus novelty and inventive step cannot be assessed with regard to the BU value (inner), the BU value (outer), and the R value.

Form PCT/ISA/210 (extra sheet) (January 2015)

**INTERNATIONAL SEARCH REPORT**

International application No.
PCT/JP2018/035363

However, it can be understood with reference to the explanations in paragraphs [0025], [0029], and [0036] of the description that the BU value is an index representing the size of a hole diameter or the number of holes, and that a smaller BU value indicates a smaller hole diameter size or a fewer number of holes, and from the explanations in paragraphs [0004], [0006] and [0010] and the fact that the R value is the BU value (inner)/the BU value (outer), it is recognized that "the porous membrane layer", pertaining to the invention in claim 1 of the present application, is configured to have a smaller hole diameter or a fewer number of holes at a position in the vicinity of the outside of the porous membrane layer (a position corresponding to 5% of the thickness from the outside of the porous membrane layer) than at a position in the vicinity of the central region of the porous membrane layer (a position corresponding to 65% of the thickness from the outside of the porous membrane layer).

(Also, regarding a feature of simply limiting only the range of the BU value, it is recognized that said delimiting feature cannot be specified because it is unclear what feature is specified by the size of the specific BU value.)

Form PCT/ISA/210 (extra sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2017183630 A
- JP 2018044646 A
- JP 2018149977 A
- WO 2009142279 A
- US 4680352 A
- WO 8804304 A
- JP S60133007 B
- US 5147952 A
- JP H11240854 B